(19) Europäisches Patentamt
European Patent Office
Office européen des brevets

(11) EP 3 369 778 B1

# (12) EUROPEAN PATENT SPECIFICATION

(45) Date of publication and mention of the grant of the patent:
**30.09.2020 Bulletin 2020/40**

(21) Application number: **16859227.7**

(22) Date of filing: **06.07.2016**

(51) Int Cl.:
***C08L 77/00*** (2006.01) ***C08J 7/00*** (2006.01)
***C08K 5/10*** (2006.01) ***C08K 5/17*** (2006.01)
***C08K 5/51*** (2006.01) ***C08K 5/1515*** (2006.01)
***B29C 71/02*** (2006.01) ***C08K 5/053*** (2006.01)
***C08L 77/02*** (2006.01) ***C08L 77/06*** (2006.01)

(86) International application number:
**PCT/JP2016/003220**

(87) International publication number:
**WO 2017/072986 (04.05.2017 Gazette 2017/18)**

## (54) MOLDED ARTICLE COMPRISING RESIN COMPOSITION CONTAINING POLYAMIDE RESIN

FORMKÖRPER MIT EINER HARZZUSAMMENSETZUNG MIT POLYAMIDHARZ

ARTICLE MOULÉ COMPRENANT UNE COMPOSITION DE RÉSINE CONTENANT UNE RÉSINE POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2015 JP 2015214366**

(43) Date of publication of application:
**05.09.2018 Bulletin 2018/36**

(73) Proprietor: **Toray Industries, Inc.**
**Tokyo 103-8666 (JP)**

(72) Inventors:
- **OKUNAGA, Kenichi**
**Nagoya-shi**
**Aichi 455-8502 (JP)**
- **MASUNAGA, Atsushi**
**Nagoya-shi**
**Aichi 455-8502 (JP)**
- **NISHIDA, Shingo**
**Nagoya-shi**
**Aichi 455-8502 (JP)**
- **AKITA, Masaru**
**Nagoya-shi**
**Aichi 455-8502 (JP)**
- **UMETSU, Hideyuki**
**Nagoya-shi**
**Aichi 455-8502 (JP)**

(74) Representative: **Mewburn Ellis LLP**
**Aurora Building**
**Counterslip**
**Bristol BS1 6BX (GB)**

(56) References cited:
**WO-A1-2015/056393**
**JP-A- H07 138 473**
**JP-A- H08 245 598**
**JP-A- 2008 504 425**
**JP-A- 2013 542 311**
**JP-A- 2014 141 630**
**US-A1- 2008 269 375**
**US-A1- 2015 005 416**
**US-B2- 8 952 107**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 369 778 B1

## Description

The present invention relates to a molded product made from a resin composition including a polyamide resin.

### Background Art

Polyamide resins have good mechanical properties, heat resistance, chemical resistance and heat aging resistance and are thereby favorably used in automobile applications and electric and electronic component applications. Among various applications, automobile under-hood components such as a radiator tank and a canister are required to suppress cracking caused by erosion of the polyamide resin by a road antifreezing agent such as calcium chloride, i.e., required to have calcium chloride resistance.

A known technique of improving the calcium chloride resistance of the polyamide resin is a polyamide resin composition obtained by blending, for example, polyamide 6 or polyamide 66 with a higher-order polyamide selected from polyamides 11, 12, 610 and 612 (as described in, for example, Patent Document 1). The environment temperature in an engine room tends to increase accompanied with an increase in density of components in an automobile engine room, an increase in engine output and an increase in temperature in the exhaust system by high fuel efficiency. The polyamide resin is accordingly required to have long-term heat aging resistance. The polyamide resin composition described in Patent Document 1, however, still has insufficient heat aging resistance.

A known technique of improving the heat aging resistance of the polyamide resin is a polyamide resin composition obtained by blending a polyamide resin with a copper compound and a halogen compound (as described in, for example, Patent Document 2). The polyamide resin composition described in Patent Document 2, however, still has insufficient heat aging resistance and insufficient calcium chloride resistance in a use environment temperature increased lately.

By taking into account such situations, various technical improvements have been tried as the technique of improving the heat aging resistance at high temperature. For example, one proposed technique is a polyamide resin composition including a polyamide resin, polyethylene imine, a lubricant, a copper-containing stabilizer, a filler and nigrosine (as described in, for example, Patent Document 3). Another proposed technique is a polyamide resin composition including a polyamide resin, a polyol having a number-average molecular weight of less than 2000, auxiliary stabilizer such as a copper-containing stabilizer and hindered phenol, and a polymer reinforcing material (as described in, for example, Patent Document 4). Another proposed technique is a polyamide resin composition including a polyamide resin and a compound of a specific structure including a hydroxy group and an epoxy group or a carbodiimide group and/or its condensate (as described in, for example, Patent Document 5).

Patent Document 6 relates to polyamide compositions having improved long-term high temperature aging. Sodium hypophosphite is employed in the preparation of an example PA66/6T polymer blend. Patent Document 7 concerns polyamide resin compositions for use in automobile radiators. The compositions may contain a phosphate-based antioxidant.

### Prior Art Documents

Patent Document 1: JP S57-212252A; Patent Document 2: JP 2006-273945A; Patent Document 3: WO 2006/084862A; Patent Document 4: WO 2010/014810A; Patent Document 5: WO 2015/56393A; Patent Document 6: US 8952107B and Patent Document 7: US 2008/069375A.

### Problems to be Solved by the Invention

The use environment temperature of under-hood components in an automobile engine room tends to increase year after year. The components in the automobile engine rooms are accordingly required to have the higher heat aging resistance for a longer time period even under such high temperature conditions and the calcium chloride resistance under the high temperature conditions. Molded products obtained from the polyamide resin compositions described in Patent Documents 3 and 4 given above, however, have still insufficient long-term heat aging resistance and insufficient calcium chloride resistance. The polyamide resin composition described in Patent Document 5 has good heat aging resistance but is required to have the better long-term heat aging resistance. The polyamide resin composition described in Patent Document 5 also has still insufficient calcium chloride resistance in a high temperature environment.

By taking into account such problems of the prior arts, an object of the invention is to provide a molded product having excellent longer-term heat aging resistance and excellent calcium chloride resistance under a high temperature condition.

Means for Solving the Problem

In order to solve the problem described above, the present invention provides a molded product as defined in the accompanying claim 1.

[1] There is provided a molded product that is made from a resin composition including a polyamide resin and that has a thickness of not less than 0.56 mm. A difference (Q - P) between Q and P is less than 0.06, where P (A1680/ A1632) denotes an intensity ratio of a maximum value of absorbance A1680 at 1680 $cm^{-1} \pm 8$ $cm^{-1}$ to a maximum value of absorbance A1632 at 1632 $cm^{-1} \pm 8$ $cm^{-1}$ with an absorbance at 1800 $cm^{-1}$ being set to 0 with regard to an infrared absorption spectrum of a cutting surface at a depth of 0.28 mm from a surface of the molded product, and Q (A'1680/ A'1632) denotes an intensity ratio of a maximum value of absorbance A'1680 at 1680 $cm^{-1} \pm 8$ $cm^{-1}$ to a maximum value of absorbance A'1632 at 1632 $cm^{-1} \pm 8$ $cm^{-1}$ with an absorbance at 1800 $cm^{-1}$ being set to 0 with regard to an infrared absorption spectrum of a heat-treated cutting surface that is the cutting surface after heat treatment at a temperature lower than a melting point of the polyamide resin by 35°C for 24 hours, and wherein the resin composition further comprises sodium hypophosphite, and the phosphorous atom content obtained by absorption spectrophotometry is 1000 to 3500 ppm relative to the polyamide resin content.
The configuration of the molded product described in [1] provides a molded product having excellent long-term heat aging resistance and excellent calcium chloride resistance under a high temperature condition.
[2] In the molded product described in [1], with regard to the infrared absorption spectrum of the heat-treated cutting surface, an intensity ratio R (A'1700/ A'1632) of a maximum value of absorbance A'1700 at 1700 $cm^{-1} \pm 8$ $cm^{-1}$ to the maximum value of absorbance A'1632 at 1632 $cm^{-1} \pm 8$ $cm^{-1}$ with the absorbance at 1800 $cm^{-1}$ being set to 0 may be smaller than an intensity ratio S (A'1720/ A'1632) of a maximum value of absorbance A'1720 at 1720 $cm^{-1}$ $\pm 8$ $cm^{-1}$ to the maximum value of absorbance A'1632 at 1632 $cm^{-1} \pm 8$ $cm^{-1}$. A difference (S - T) between S and T may be equal to or greater than 0.03, where T (A1720/ A1632) denotes an intensity ratio of a maximum value of absorbance A1720 at 1720 $cm^{-1} \pm 8$ $cm^{-1}$ to the maximum value of absorbance A1632 at 1632 $cm^{-1} \pm 8$ $cm^{-1}$ with regard to the infrared absorption spectrum of the cutting surface prior to the heat treatment.
The configuration of the molded product described in [2] provides a molded product having the more improved heat aging resistance and the more improved calcium chloride resistance.
[3] In the molded product described in either [1] or [2], the resin composition may comprise at least one of a compound (b) and a compound (B) to be 0.1 to 20 parts by weight as a total relative to 100 parts by weight of the polyamide resin (A). The compound (b) is a compound having at least either three or more hydroxy groups or three or more amino groups. The compound (B) is a compound having at least either a hydroxy group or an amino group and having at least either an epoxy group or a carbodiimide group, such that a total number of the hydroxy group and the amino group in one molecule is larger than a total number of the epoxy group and the carbodiimide group in one molecule.

The molded product described in [3] is more likely to form a shield layer having an ester bond when being heated, and accordingly enables the value Q-P and the value S-T to be readily adjusted in desired ranges. This thereby provides a molded product having the more improved heat aging resistance and the more improved calcium chloride resistance. The compound (B) has the higher compatibility with the polyamide resin (A) than the compound (b) and forms a shield phase having a denser network structure in the polyamide resin composition. This accordingly provides a molded product having the more improved heat aging resistance. Additionally, the number of functional groups in one molecule of the compound (B) in a specified range provides a molded product having the more improved calcium chloride resistance.

In the molded product described in any of [1] to [3], the resin composition further comprises a phosphorus-containing compound (C), namely sodium hypophosphite, and a phosphorus atom content obtained by absorption spectrophotometry is 1000 to 3500 ppm relative to a polyamide resin content.

This further improves the reactivity of the polyamide resin (A) with the compound (b) and/or the compound (B) and accelerates formation of a shield layer during heat treatment. This enables the value Q-P and the value S-T to be readily adjusted in desired ranges and thereby provides a molded product having the more improved heat aging resistance and the more improves calcium chloride resistance.

Advantageous Effects of Invention

The molded product of the invention has excellent long-term heat aging resistance and excellent calcium chloride resistance in a high temperature environment.

Brief Description of Drawings

Fig. 1 is a diagram illustrating IR spectra of a cutting surface and a heat treated cutting surface of a molded product obtained in Example 3; and

Fig. 2 is an enlarged view of the IR spectra shown in Fig. 1 in a range of 1800 $cm^{-1}$ to 1600 $cm^{-1}$.

Description of Embodiments

The following describes one embodiment of the present invention in detail. A molded product according to the embodiment of the invention is a molded product that is made from a resin composition including a polyamide resin and that has a thickness of not less than 0.56 mm. A difference (Q - P) between Q and P is less than 0.06, where P (A1680/A1632) denotes an intensity ratio of a maximum value of absorbance A1680 at 1680 $cm^{-1} \pm 8$ $cm^{-1}$ to a maximum value of absorbance A1632 at 1632 $cm^{-1} \pm 8$ $cm^{-1}$ with an absorbance at 1800 $cm^{-1}$ being set to 0 with regard to an infrared absorption spectrum of a cutting surface at a depth of 0.28 mm from a surface of the molded product, and Q (A'1680/A'1632) denotes an intensity ratio of a maximum value of absorbance A'1680 at 1680 $cm^{-1} \pm 8$ $cm^{-1}$ to a maximum value of absorbance A'1632 at 1632 $cm^{-1} \pm 8$ $cm^{-1}$ with an absorbance at 1800 $cm^{-1}$ being set to 0 with regard to an infrared absorption spectrum of a heat-treated cutting surface that is the cutting surface after heat treatment at a temperature lower than a melting point of the polyamide resin by 35°C for 24 hours. The absorbance at 1632 $cm^{-1} \pm 8$ $cm^{-1}$ is absorption derived from an amide bond of the polyamide resin, and the absorbance at 1680 $cm^{-1} \pm 8$ $cm^{-1}$ is absorption at a position between a peak at 1700 $cm^{-1}$ derived from a carboxy group of the polyamide resin and a peak at 1632 $cm^{-1}$ derived from the amide bond. As described later, the value of Q-P serves as an index indicating the degree of oxidation degradation of the polyamide resin. The following describes Q and P more in detail.

The degree of thermal oxidation degradation of the polyamide resin in the molded product according to the embodiment of the present invention may be evaluated by comparing an increased amount of the absorbance at 1680 $cm^{-1}$ before and after heat treatment with a decreased amount of the absorbance at 1632 $cm^{-1}$ that is an absorption peak derived from an amide bond of the polyamide resin in an infrared absorption spectrum of the cutting surface obtained by infrared ATR spectroscopy with a Fourier transform infrared spectrophotometer. When a prior art molded product made from a resin composition including a polyamide resin is heated, oxidation degradation of the polyamide resin causes decomposition of the amide group to proceed and causes generation of an amino end group and a carboxy end group to proceed. Increases of the amino group and the carboxy group in a high temperature environment become a factor of further acceleration of thermal degradation. The peak at 1632 $cm^{-1}$ is a peak derived from the amide bond of the polyamide resin. Thermal oxidation degradation of the polyamide resin causes decomposition of the amide group to proceed and decreases the absorbance at 1632 $cm^{-1}$.

The molded product according to the embodiment of the present invention may be, on the other hand, made from, for example, a resin composition that is preferably used in the embodiment of the present invention described later. Heat treatment of this molded product causes a hydroxy group, an amino group, an epoxy group or a carbodiimide group of a compound (b) having at least either three or more hydroxy groups or three or more amino groups and a compound (B) having at least either a hydroxy group or an amino group and having at least either an epoxy group or a carbodiimide group, such that a total number of hydroxy group and amino groups in one molecule is larger than a total number of epoxy groups and carbodiimide groups in one molecule, to be bonded to a terminal of a polyamide resin (A) by dehydration condensation or the like. This forms a shield layer having a dense network of the polyamide resin (A) and the compound (b) and/or the compound (B), on the surface of the molded product. The shield layer formed on the surface of the molded product suppresses oxidation degradation of the polyamide resin in a high temperature environment and thereby suppresses a decrease in the absorbance at 1632 $cm^{-1}$. Accordingly, 1632 $cm^{-1}$ is an important absorption band serving as an index that indicates the degree of oxidation degradation of the polyamide resin and serving as a reference value in normalization of respective peaks as described later.

1680 $cm^{-1}$ is, on the other hand, a middle position between a peak at 1700 $cm^{-1}$ derived from the carboxy group of the polyamide resin and a peak at 1632 $cm^{-1}$ derived from the amide bond. Decomposition of the amide group associated with oxidation degradation of the polyamide resin increases the absorbance at 1700 $cm^{-1}$, while decreasing the absorbance at 1632 $cm^{-1}$. This results in a relative increase of the absorbance at 1680 $cm^{-1}$. The amount of the amide bond and the amount of the carboxy group in the molded product may have effects other than the polyamide resin. For accurate evaluation of the decomposition of the amide group by oxidation degradation of the polyamide resin, there is accordingly a need to evaluate a decrease in the absorbance at 1632 $cm^{-1}$ derived from the amide bond in combination with an increase in the absorbance at 1700 $cm^{-1}$ derived from the carboxy group that is increased by decomposition of the amide group. The present invention accordingly focuses on a variation in the absorbance at 1680 $cm^{-1}$.

According to the embodiment of the present invention, by taking into account a potential difference in peak position by several cm-1 depending on the infrared spectrophotometer used for measurement and eliminating a potential effect by overlap with another peak, a maximum value of absorbance A1680 at 1680 $cm^{-1}$ ± 8 $cm^{-1}$ is defined as the absorbance at 1680 $cm^{-1}$, and a maximum value of absorbance A1632 at 1632 $cm^{-1}$ ± 8 $cm^{-1}$ is defined as the absorbance at 1632 $cm^{-1}$. Similarly, with regard to an infrared absorption spectrum of the cutting surface after heat treatment, a maximum value of absorbance A'1680 at 1680 $cm^{-1}$ ± 8 $cm^{-1}$ is defined as the absorbance at 1680 $cm^{-1}$, and a maximum value of absorbance A'1632 at 1632 $cm^{-1}$ ± 8 $cm^{-1}$ is defined as the absorbance at 1632 $cm^{-1}$. The absorbance of the absorption spectrum is varied according to the infrared spectrophotometer used for measurement and the measurement conditions. It is accordingly impractical to directly compare the values of absorbance measured under different measurement conditions. According to the invention, the absorbance at 1800 $cm^{-1}$ is selected and is set to 0, as the basis of the absorbances A1680, A1632, A'1680 and A'1632. Acid anhydrides are exemplary compounds having absorption bands near to 1800 $cm^{-1}$. In the scope of a general resin composition, an acid anhydride reacts with an amino group of the polyamide resin and is present in a ring-opened form to be changed to a carboxylic acid and an amide bond. The content of the remaining acid anhydride even if any is very little and is negligible in effect on the absorbance at about 1800 $cm^{-1}$. Accordingly, the present invention focuses on maximum values of absorbance A1680 and A'1680 at 1680 $cm^{-1}$ ± 8 $cm^{-1}$ and maximum values of absorbance A1632 and A'1632 at 1632 $cm^{-1}$ ± 8 $cm^{-1}$ with the absorbance at 1800 $cm^{-1}$ being set to 0. Additionally, the present invention performs normalization by respectively dividing the values A1680 and A'1680 by the values A1632 and A'1632.

In general, when a molded product made from a resin composition including a polyamide resin is heated under atmospheric pressure, oxidation degradation of the polyamide resin is likely to occur on the surface of the molded product. The inside of the molded product is, however, less affected by oxidation degradation. According to the embodiment of the present invention, the depth of 0.28 mm from the surface of the molded product is selected as the inside of the unheated molded product, and the absorbance in an infrared absorption spectrum of a cutting surface at this depth is used as the basis in focusing on a variation in absorbance. In order to secure the depth of 0.28 mm from the depth of the molded product, the molded product according to the embodiment of the present invention has a depth of not less than 0.56 mm. The depth of the molded product herein denotes a depth of a thickest portion of the molded product. In a molded product with a screw hole for drainage or the like, however, such a portion is to be excluded.

As described above, heat treatment of the molded product according to the embodiment of the present invention forms a shield layer on the surface of the molded product. This shield layer serves to block and suppress oxygen from entering inside of the molded product and thereby significantly suppress oxidation degradation of the polyamide resin inside of the molded product in a high temperature environment. This shield layer not only serves to block and suppress oxygen from entering also serves to block and suppress calcium chloride that is a snow melting agent from entering and thereby significantly suppress degradation of the polyamide resin by calcium chloride. In order to suppress oxidation degradation of the polyamide resin and degradation of the polyamide resin by calcium chloride, it is desirable to form the shield layer in the initial stage of heat treatment. The formation of the shield layer, however, requires the reaction of the terminal of the polyamide resin and accordingly takes some time. By taking into account the time duration required for formation of the shield layer, the present invention focuses on the absorbance after heat treatment for 24 hours.

According to the embodiment of the present invention, for evaluation of the degree of thermal degradation of the polyamide resin, a heat-treated cutting surface that is the cutting surface after heat treatment at a temperature lower than a melting point of the polyamide resin by 35°C for 24 hours is focused as the heated state.

The embodiment of the present invention focuses on a value of difference (Q-P) between Q and P when P (A1680/ A1632) denotes an intensity ratio of A1680 to A1632 and Q (A'1680/ A'1632) denotes an intensity ratio of A'1680 to A'1632. When oxidation degradation of the polyamide resin proceeds, the value of the difference between Q and P increases because of an increase of A'1680 and decrease of A'1632 as described above. The molded product according to the embodiment of the invention has the value Q-P less than 0.06 with a view to suppressing thermal oxidation degradation of the polyamide resin. The value Q-P equal to or greater than 0.06 suggests the progress of decomposition of the amide group by oxidation degradation of the polyamide resin. The progress of decomposition of the amide group is likely to cause embrittlement and cracking on the surface of the molded product associated with reduction of the molecular weight and accordingly reduces the heat aging resistance and the calcium chloride resistance. The value Q-P is preferably less than 0.060. The value Q-P is preferably less than 0.05 and is more preferably less than 0.050. Furthermore, the value Q-P is preferably less than 0.04 and is more preferably less than 0.040. The smaller value Q-P suggests more suppression of thermal oxidation degradation. The value Q-P equal to 0 shows no progress of oxidation degradation of the polyamide resin before and after heat treatment. It is accordingly preferable that the value Q-P is equal to or greater than 0.

The molded product having the value Q-P that is less than 0.06 may be obtained, for example, by molding a resin composition described later.

The shield layer described above may be comprised of one of reaction products between a polyamide resin (A) and a compound (b) having at least either three or more hydroxy groups or three or more amino groups and a

compound (B) having at least either a hydroxy group or an amino group and having at least either an epoxy group or a carbodiimide group, such that a total number of hydroxy group and amino groups in one molecule is larger than a total number of epoxy groups and carbodiimide groups in one molecule as described later. Among these, including an ester bond is especially preferable since this further improves the heat aging resistance and the calcium chloride resistance.

In the case of formation of the shield layer including an ester bond on the surface of the molded product, a peak at 1700 $cm^{-1}$ derived from a carboxy group and a peak at 1720 $cm^{-1}$ derived from an ester bond in the infrared absorption spectrum may be additionally used as the index indicating the degree of oxidation degradation of the polyamide resin. More specifically, it is preferable that an intensity ratio R (A'1700/ A'1632) of a maximum value of absorbance A'1700 at 1700 $cm^{-1} \pm 8$ $cm^{-1}$ to the maximum value of absorbance A'1632 at 1632 $cm^{-1} \pm 8$ $cm^{-1}$ with the absorbance at 1800 $cm^{-1}$ being set to 0 is smaller than an intensity ratio S (A'1720/ A'1632) of a maximum value of absorbance A'1720 at 1720 $cm^{-1} \pm 8$ $cm^{-1}$ to the maximum value of absorbance A'1632 at 1632 $cm^{-1} \pm 8$ $cm^{-1}$ with regard to the infrared absorption spectrum of the cutting surface after heat treatment, and that a difference (S - T) between S and T is equal to or greater than 0.03 when T (A1720/ A1632) denotes an intensity ratio of a maximum value of absorbance A1720 at 1720 $cm^{-1} \pm 8$ $cm^{-1}$ to the maximum value of absorbance A1632 at 1632 $cm^{-1} \pm 8$ $cm^{-1}$ with regard to the infrared absorption spectrum of the cutting surface prior to heat treatment. It is more preferable that the difference (S-T) is equal to or greater than 0.030.

The peak at 1700 $cm^{-1}$ denotes a peak derived from a carboxy group that is generated by oxidation degradation of the polyamide resin. The peak intensity increases with the progress of oxidation degradation of the polyamide resin. The peak at 1720 $cm^{-1}$ denotes a peak derived from an ester bond. The peak intensity increases with an increase in number of ester bonds. Accordingly, the peak intensity increases in the shield layer having the ester bond. The peak at 1632 $cm^{-1}$ is described previously. As in the case of A'1680 and A'1632, by taking into account a potential difference in peak position according to the measurement conditions and eliminating a potential effect by overlap with another peak, the absorbance at 1800 $cm^{-1}$ is used as the basis and is set to 0. With regard to the infrared absorption spectrum of the cutting surface after heat treatment, a maximum value of absorbance at 1700 $cm^{-1} \pm 8$ $cm^{-1}$ with the absorbance at 1800 $cm^{-1}$ being set to 0 is defined as A'1700 and a maximum value of absorbance at 1720 $cm^{-1} \pm 8$ $cm^{-1}$ is defined as A'1720. Additionally, the values A'1700 andA'1720 are divided by the value A'1632 to be normalized.

The value A'1720 used as the absorbance derived from the ester bond is affected by an increase of the peak at 1700 $cm^{-1}$ derived from the carboxy group that is generated by oxidative decomposition of the amide group. When the value A'1720 is used as the index indicating the degree of oxidation degradation of the polyamide resin, it is preferable that the intensity ratio R (A'1700/A'1632) is smaller than the intensity ratio S (A'1720/ A'1632).

According to the embodiment of the invention, the intensity ratio difference (S-T) between the intensity ratio S (A'1720/A'1632) of A'1720 to A'1632 in the infrared absorption spectrum of the cutting surface after heat treatment and the intensity ratio T (A1720/ A1632) of A1720 to A1632 in the infrared absorption spectrum of the cutting surface prior to heat treatment is preferably equal to or greater than 0.03 and is more preferably equal to or greater than 0.030. The configuration of this embodiment further improves the heat aging resistance and the calcium chloride resistance. In terms of more quickly trapping the carboxy group generated by decomposition of the amide group and more promptly forming the shield layer including the ester bond on the surface of the molded product, on the other hand, the value S-T is preferably less than 0.09 and is more preferably less than 0.090. The configuration of this embodiment further improves the heat aging resistance and the calcium chloride resistance. The value S-T is preferably less than 0.08 and is more preferably less than 0.080. Furthermore, the value S-T is preferably less than 0.07 and is more preferably less than 0.070.

The molded product having R that is smaller than S and having the value S-T that is equal to or greater than 0.03 may be obtained by, for example, molding a resin composition described later.

The above values P, Q, R, S and T may be determined by a method described below. A cutting surface is provided by cutting a molded product having a thickness of not less than 0.56 mm from the surface to the depth of 0.28 mm with a milling machine and subsequent mirror finishing with a diamond cutter. An FT-IR spectrum of the cutting surface is measured by infrared ATR spectroscopy with a Fourier transform infrared spectrophotometer. In the observed FT-IR spectrum, a maximum value of absorbance A1680 at 1680 $cm^{-1} \pm 8$ $cm^{-1}$, a maximum value of absorbance A1632 at 1632 $cm^{-1} \pm 8$ $cm^{-1}$ and a maximum value of absorbance A1720 at 1720 $cm^{-1} \pm 8$ $cm^{-1}$ with an absorbance at 1800 $cm^{-1}$ being set to 0 are determined, and P (A1680/ A1632) and T (A1720/ A1632) are calculated. An FT-IR spectrum of the cutting surface of the molded product after heat treatment is measured similarly. In the observed IR spectrum, a maximum value of absorbance A'1680 at 1680 $cm^{-1} \pm 8$ $cm^{-1}$, a maximum value of absorbance A'1632 at 1632 $cm^{-1} \pm$ 8 $cm^{-1}$, a maximum value of absorbance A'1700 at 1700 $cm^{-1} \pm 8$ $cm^{-1}$ and a maximum value of absorbance A'1720 at 1720 $cm^{-1} \pm 8$ $cm^{-1}$ with an absorbance at 1800 $cm^{-1}$ being set to 0 are determined, and Q (A'1680/A'1632), R (A'1700/A'1632) and S (A'1720/ A'1632) are calculated. The absorbance ratio differences Q-P and S-T are determined from these numerical values.

As an example, Fig. 1 shows an IR spectrum Un of a cutting surface of a molded product obtained in Example 3 described later and an IR spectrum Ht of the cutting surface after heat treatment. More specifically, two IR spectra

shown in Fig. 1 are IR spectra measured by infrared ATR spectroscopy with a Fourier transform infrared spectrophotometer, with regard to a cutting surface obtained by cutting a molded product that is made from a polyamide resin composition and that has a thickness of 6.4 mm, from the surface of the molded product to the depth of 0.28 mm and a heat-treated cutting surface that is the cutting surface after heat treatment at 190°C for 24 hours. Fig. 2 is an enlarged view of the IR spectra shown in Fig. 1 in a range of 1800 $cm^{-1}$ to 1600 $cm^{-1}$. The ordinate in Fig. 2 is corrected by setting the absorbance at 1800 $cm^{-1}$ to 0.

The following describes the resin composition used to form the molded product according to the embodiment of the present invention.

The resin composition used for the molded product according to the embodiment of the invention includes a polyamide resin (A). The polyamide resin (A) used according to the embodiment of the invention is a polyamide mainly made of (i) an amino acid, (ii) a lactam or (iii) a diamine and a dicarboxylic acid as the primary raw material. Typical examples of the raw material of the polyamide resin include: amino acids such as 6-aminocaproic acid, 11-aminoundecanoic acid, 12-aminododecaic acid and para-aminomethylbenzoic acid; lactams such as ε-caprolactam and ω-laurolactam; aliphatic diamines such as tetramethylene diamine, pentamethylene diamine, hexamethylene diamine, 2-methyl pentamethylene diamine, nonamethylene diamine, decamethylene diamine, undecamethylene diamine, dodecamethylene diamine, 2,2,4-/ 2,4,4-trimethyl hexamethylene diamine, 5-methyl nonamethylene diamine and 2-methyl octamethylene diamine; aromatic diamines such as meta-xylylenediamine and para-xylylenediamine; alicyclic diamines such as 1,3-bis(aminomethyl)cyclohexane, 1,4-bis (aminomethyl) cyclohexane, 1- amino- 3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine; aliphatic dicarboxylic acids such as adipic acid, suberic acid, azelaic acid, sebacic acid and dodecanedioic acid; aromatic dicarboxylic acids such as terephthalic acid, isophthalic acid, 2-chloroterephthalic acid, 2-methylterephthalic acid, 5-methylisophthalic acid, sodium 5-sulfoisophthalate, 2,6-naphthalenedicarboxylic acid, hexahydroterephthalic acid, and hexahydroisophthalic acid; and alicyclic dicarboxlic acids such as 1,4-cyclohexane dicarboxylic acid, 1,3-cyclohexane dicarboxylic acid, 1,2-cyclohexane dicarboxylic acid, and 1,3-cyclopentane dicarboxylic acid. According to the embodiment of the present invention, two or more different polyamide homopolymers or polyamide copolymers derived from these raw materials may be included as the raw material of the polyamide resin (A).

Concrete examples of the polyamide resin include polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecanamide (nylon 11), polydodecanamide (nylon 12), polycaproamide/ polyhexamethylene adipamide copolymer (nylon 6/ 66), polycaproamide/ polyhexamethylene terephthalamide copolymer (nylon 6/ 6T), polyhexamethylene adipamide/ polyhexamethylene terephthalamide copolymer (nylon 66/ 6T), polyhexamethylene adipamide/ polyhexamethylene isophthalamide copolymer (nylon 66/ 6I), polyhexamethylene terephthalamide/ polyhexamethylene isophthalamide copolymer (nylon 6T/ 6I), polyhexamethylene terephthalamide/ polyundecanamide copolymer (nylon 6T/ 11), polyhexamethylene terephthalamide/ polydodecanamide copolymer (nylon 6T/ 12), polyhexamethylene adipamide/ polyhexamethylene terephthalamide/ polyhexamethylene isophthalamide copolymer (nylon 66/ 6T/ 6I), polyhexamethylene adipamide/ polyhexamethylene isophthalamide/ polycaproamide copolymer (nylon 66/ 6I/ 6), polyxylylene adipamide (nylon XD6), polyxylylene sebacamide (nylon XD10), polyhexamethylene terephthalamide/ polypentamethylene terephthalamide copolymer (nylon 6T/ 5T), polyhexamethylene terephthalamide/ poly-2-methylpentamethylene terephthalamide copolymer (nylon 6T/ M5T), polypentamethylene terephthalamide/ polydecamethylene terephthalamide copolymer (nylon 5T/ 10T), polynonamethylene terephthalamide (nylon 9T), polydecamethylene terephthalamide (nylon 10T), and polydodecamethylene terephthalamide (nylon 12T). Concrete examples of the polyamide resin also include mixtures and copolymers thereof. The sign "/" represents copolymerization. The same applies to the description below.

The degree of polymerization of any of these polyamide resins is not specifically limited. It is preferable that the relative viscosity (ηr) measured at 25°C in a 98% concentrated sulfuric acid solution having a resin concentration of 0.01 g/ml is in a range of 1.5 to 5.0. The relative viscosity of not lower than 1.5 further improves the heat aging resistance of the obtained molded product. The relative viscosity is more preferably not lower than 2.0. The relative viscosity of not higher than 5.0, on the other hand, improves the moldability of the resin composition.

The water content of the polyamide resin (A) used according to the embodiment of the invention is preferably lower than 5000 ppm. Using the polyamide resin (A) having the water content of lower than 5000 ppm to manufacture the resin composition, for example, to manufacture the resin composition by melt-kneading the polyamide resin (A) with the compound (B), further improves the dispersibility of the compound (B) by the appropriate shear force. This configuration enables the value Q-P and the value S-T to be readily adjusted in the desired ranges described above. This accordingly further improves the heat aging resistance and the calcium chloride resistance of the molded product. The water content of the polyamide resin (A) is preferably not higher than 1000 ppm and is more preferably not higher than

500 ppm. The water content of the polyamide resin (A) according to the invention denotes the water content of the polyamide resin (A) that is the raw material of the resin composition used to form the molded product according to the embodiment of the invention and may be measured by ISO 15512.

The resin composition used for the molded product according to the embodiment of the invention includes at least one of a compound (b) having at least either three or more hydroxy groups or three or more amino groups (hereinafter may be referred to as the "compound (b)") and a compound (B) having at least either a hydroxy group or an amino group and having at least either an epoxy group or a carbodiimide group, such that a total number of hydroxy group and amino groups in one molecule is larger than a total number of epoxy groups and carbodiimide groups in one molecule (hereinafter may be referred to as the "compound (B)").

The hydroxy group and/ or the amino group of the compound (b) and the compound (B) are expected to have dehydration condensation reaction with a carboxy end group of the polyamide resin (A). The hydroxy group and/ or the amino group and the epoxy group and/or the carbodiimide group of the compound (b) and the compound (B) are expected to react with an amino end group and a carboxy end group of the polyamide resin (A). The compound (b) and the compound (B) accordingly have good compatibility with the polyamide resin (A). The resin composition including the compound (b) and/or the compound (B) is more likely to form the shield layer having the ester bond when being heated as described above. This configuration enables the value Q-P and the value S-T to be readily adjusted in the desired ranges described above and further improves the heat aging resistance and the calcium chloride resistance.

Using either of the compound (b) and the compound (B) provides the advantageous effects according to the embodiment of the invention. Especially, the epoxy group and/or the carbodiimide group of the compound (B) are expected to react with the amino end group and the carboxy end group of the polyamide resin (A). Accordingly, compared with the compound (b), the compound (B) has the better compatibility with the polyamide resin (A) and is likely to form the shield layer having the denser network structure in the polyamide resin composition, thus further improving the heat aging resistance. Additionally, the epoxy group and the carbodiimide group have the better reactivity with the end group of the polyamide resin (A), compared with the hydroxy group and the amino group. Accordingly, the configuration that the total number of the hydroxy group and the amino group is larger than the total number of the epoxy group and the carbodiimide group in one molecule of the compound (B) suppresses embrittlement due to formation of the excessive crosslinking structure and further improves the calcium chloride resistance. More preferable is a compound having a hydroxy group and an epoxy group and/or a carbodiimide group.

In the resin composition used for the molded product according to the embodiment of the invention, the compound (B) is to be included in the resin composition in the form of the compound (B). For example, the compound (B) may be formed in the resin composition by individually blending the compound (b) and an epoxy group- and/or a carbodiimide group-containing compound (hereinafter may be referred to as "compound (b')") described later with the polyamide resin (A). In another example, the compound (B) obtained in advance by reaction of these compounds (b) and (b') may be blended with the polyamide resin (A). It is preferable to blend the compound (B) obtained in advance by the reaction of these compounds (b) and (b'), with the polyamide resin (A). This provides the better compatibility of the compound (B) with the polyamide resin (A) and further improves the heat aging resistance and the calcium chloride resistance. This cause is not elucidated but may be attributed to the following. Reacting the compound (b) with the compound (b') in advance forms the compound (B) having a multi-branched structure with the compound (b') serving as the connecting point. This compound (B) having the multi-branched structure has the smaller autoagglutination force and is thus expected to have the improved reactivity and the improved compatibility with the polyamide resin (A). The compound (B) having the multi-branched structure also has the improved melt viscosity and is thus expected to have the more improved dispersibility in the resin composition.

According to the embodiment of the present invention, the compound (B) may be a reaction product of the compound (b) and the compound (b') described later. The compound (B) may be a low-molecular compound, may be a polymer or may be a condensate. The structure of the compound (B) may be identified by a conventional analysis technique (for example, a combination of NMR, FT-IR, GC-MS and the like).

According to the embodiment of the invention, the branching degree of the compound (B) is not specifically limited but is preferably 0.05 to 0.70. The branching degree is a numerical value indicating the branching degree in a compound. A linear compound has a branching degree of 0, and a completely branched dendrimer has a branching degree of 1. An increase in the branching degree increases introduction of a crosslinking structure into the resin composition. The branching degree of not lower than 0.05 enables the crosslinking structure to be sufficiently formed in the resin composition and thus further improves the heat aging resistance and the calcium chloride resistance. The branching degree is more preferably not lower than 0.10. The branching degree of not higher than 0.70, on the other hand, appropriately suppresses the crosslinking structure in the polyamide resin composition, thus further enhancing the dispersibility of the compound (B) in the polyamide resin composition and further improving the heat aging resistance and the calcium chloride resistance. The branching degree is more preferably not higher than 0.35. The branching degree is defined by Expression (1) given below:

$$\text{branching degree} = (d+t)/(d+t+l) \qquad (1)$$

In Expression (1), d denotes the number of dendric units; 1 denotes the number of linear units; and t denotes the number of terminal units. These numbers d, t and 1 may be calculated from an integrated value of peak shifts measured by $^{13}C$-NMR. The number d is derived from the tertiary or the quaternary carbon atom, the number t is derived from the methyl group among the primary carbon atoms, and the number 1 is derived from the primary or the secondary carbon atom other than those involved in the number t.

The compound (B) having the branching degree in the above range may be, for example, a reaction product of a preferable compound (b) with a preferable compound (b') described later.

The hydroxy value of the compound (B) used according to the embodiment of the invention is preferably 100 to 2000 mg KOH/g. The hydroxy value of the compound (B) of not lower than 100 mg KOH/g readily assures a sufficient reaction amount of the compound (B) with the polyamide resin (A) and accordingly further improves the heat aging resistance and the calcium chloride resistance. The hydroxy value of the compound (B) is more preferably not lower than 300 mg KOH/g. The hydroxy value of the compound (B) of not higher than 2000 mg KOH/g, on the other hand, moderately increases the reactivity of the compound (B) with the polyamide resin (A) and accordingly further improves the heat aging resistance and the calcium chloride resistance. The hydroxy value of the compound (B) of not higher than 2000 mg KOH/g also suppresses gelation due to an excessive reaction. The hydroxy value of the compound (B) is more preferably not higher than 1800 mg KOH/g. The hydroxy value of the compound (B) may be determined by acetylation of the compound (B) with a mixed solution of acetic anhydride and anhydrous pyridine and titration with an ethanolic potassium hydroxide solution.

The amine value of the compound (B) used according to the embodiment of the invention is preferably 100 to 2000 mg KOH/g. The amine value of the compound (B) of not lower than 100 mg KOH/g readily assures a sufficient reaction amount of the compound (B) with the polyamide resin (A) and accordingly further improves the heat aging resistance and the calcium chloride resistance. The amine value of the compound (B) is more preferably not lower than 200 mg KOH/g. The amine value of the compound (B) of not higher than 2000 mg KOH/g, on the other hand, moderately increases the reactivity of the compound (B) with the polyamide resin (A) and accordingly further improves the heat aging resistance and the calcium chloride resistance. The amine value of the compound (B) of not higher than 2000 mg KOH/g also suppresses gelation of the resin composition due to an excessive reaction. The amine value of the compound (B) is more preferably not higher than 1600 mg KOH/g. The amine value of the compound (B) may be determined by dissolution of the compound (B) in ethanol and neutralization titration with an ethanolic hydrochloric acid solution.

The compound (B) having the hydroxy value or the amine value in the above range may be, for example, a reaction product of a preferable compound (b) with a preferable compound (b') described later.

The compound (B) used according to the embodiment of the invention is preferably a solid at 25°C or a liquid having a viscosity of not lower than 200 mPa·s at 25°C. This configuration readily provides a desired viscosity in melt-kneading, further improves the compatibility of the compound (B) with the polyamide resin (A) and further improves the heat aging resistance and the calcium chloride resistance.

The number of hydroxy groups or the number of amino groups in one molecule of the compound (B) used according to the embodiment of the invention is preferably not less than three. The number of hydroxy groups or the number of amino groups of not less than three in one molecule provides the good compatibility of the compound (B) with the polyamide resin (A) and further improves the heat aging resistance and the calcium chloride resistance. The number of hydroxy groups or the number of amino groups per one molecule is preferably not less than four and is more preferably not less than six.

In the case of a low-molecular compound, the number of hydroxy groups or the number of amino groups in one molecule of the compound (B) may be calculated by identifying the structural formula of the compound by a conventional analysis technique (for example, a combination of NMR, FT-IR, GC-MS and the like). In the case of a polymer, the number of hydroxy groups or the number of amino groups in one molecule of the compound (B) may be calculated according to Expression (2) given below after calculation of the number-average molecular weight and the hydroxy value or the amine value of the compound (B):

$$\text{number of hydroxy groups or number of amino groups} = (\text{number-average molecular weight} \times \text{hydroxy value or amine value})/56110 \quad (2)$$

The number of epoxy groups or the number of carbodiimide groups per one molecule of the compound (B)

used according to the embodiment of the invention is preferably not less than two. The number of epoxy groups or the number of carbodiimide groups of not less than two in one molecule provides the good compatibility of the compound (B) with the polyamide resin (A) and further improves the heat aging resistance and the calcium chloride resistance. The number of epoxy groups or the number of carbodiimide groups per one molecule is preferably not less than four and is more preferably not less than six.

In the case of a low-molecular compound, the number of epoxy groups or the number of carbodiimide groups in one molecule of the compound (B) may be calculated by identifying the structural formula of the compound by a conventional analysis technique (for example, a combination of NMR, FT-IR, GC-MS and the like). In the case of a polymer, the number of epoxy groups or the number of carbodiimide groups in one molecule of the compound (B) may be calculated by dividing the number-average molecular weight of the compound (B) by an epoxy equivalent or a carbodiimide equivalent.

The epoxy equivalent may be calculated from a titration amount at the time of a color change of a solution from violet to bluish green according to Expression (7) given below by dissolving the compound (B) or the compound (b') in hexafluoro-2-propanol, adding acetic acid and a tetramethylammonium bromide/ acetic acid solution, and performing titration using 0.1 N perchloric acid as a titrant and Crystal violet as an indicator:

$$\text{epoxy equivalent [g/eq]} = W/((F\text{-}G) \times 0.1 \times f \times 0.001) \quad (7)$$

In this expression, F denotes the volume [ml] of 0.1 N perchloric acid used in the titration; G denotes the volume [ml] of 0.1 N perchloric acid used in titration of a blank; f denotes the factor of 0.1 N perchloric acid; and W denotes the mass [g] of a sample.

The carbodiimide equivalent may be calculated by a method described below. The compound (B) or the compound (b') is dry blended with potassium ferrocyanide as an internal standard substance, and a sheet is produced by hot pressing the dry-blended mixture at approximately 200°C for 1 minute. The infrared absorption spectrum of the sheet is subsequently measured by the transmission method with an infrared spectrophotometer. The measurement conditions are the resolution of 4 $cm^{-1}$ and the cumulative number of 32 times. In the infrared absorption spectrum by the transmission method, the absorbance is inversely proportional to the thickness of the sheet. There is accordingly a need to standardize the peak intensity of the carbodiimide group using an internal standard peak. A value is calculated by dividing the absorbance of a carbodiimide group-derived peak appearing at about 2140 $cm^{-1}$ by the absorbance of an absorption peak of CN group of potassium ferrocyanide appearing at about 2100 $cm^{-1}$. The carbodiimide equivalent is calculated from this value by performing IR measurement using samples having known carbodiimide equivalents, preparing a calibration curve from a ratio of the absorbance of a carbodiimide group-derived peak to the absorbance of an internal standard peak and substituting an absorbance ratio of the hydroxy group-containing compound (B). An aliphatic polycarbodiimide ("CARBODILITE" (registered trademark) LA-1 manufactured by Nisshinbo Chemical Inc., carbodiimide equivalent of 247 g/ mol) and an aromatic polycarbodiimide ("STABAXOL" (registered trademark) P manufactured by LANXESS K.K., carbodiimide equivalent of 360 g/ mol) may be used as the samples having the known carbodiimide equivalents.

The compound (B) having the number of hydroxy group, the number of amino groups, the number of epoxy groups and the number of carbodiimide groups in the above ranges may be, for example, a reaction product of a preferable compound (b) with a preferable compound (b') described later.

The compound (b) used according to the embodiment of the invention is preferably an aliphatic compound having three or more hydroxy group or three or more amino groups in one molecule. The presence of three or more hydroxy groups or three or more amino groups in one molecule provides the good compatibility of the compound (b) with the polyamide resin (A) and further improves the heat aging resistance and the calcium chloride resistance. Using this compound (b) as the raw material of the compound (B) readily provides the number of hydroxy groups or the amino groups of the compound (B) in the desired range. The number of hydroxy groups or the number of amino groups in one molecule is more preferably not less than four and is furthermore preferably not less than six. Compared with the aromatic compound or the alicyclic compound, the aliphatic compound has a lower steric hindrance and provides the better compatibility of the compound (b) or the compound (B) with the polyamide resin (A). The aliphatic compound is thus expected to further improve the heat aging resistance and the calcium chloride resistance of a resulting molded product.

In the case of a low-molecular compound, the number of hydroxy groups or the number of amino groups in one molecule of the compound (b) may be calculated by identifying the structural formula of the compound by a conventional analysis technique (for example, a combination of NMR, FT-IR, GC-MS and the like). In the case of a polymer, the number of hydroxy groups or the number of amino groups in one molecule of the compound (b) may be calculated according to Expression (2) given above after calculation of the number-average molecular weight and the hydroxy value or the amine value of the compound (b).

The molecular weight of the compound (b) used according to the embodiment of the invention is not specifically limited but is preferably in a range of 50 to 10000. The molecular weight of the compound (b) of not lower than 50 causes the compound (b) or the compound (B) to be less volatile in melt-kneading and accordingly ensures the good processability. The molecular weight of the compound (b) is more preferably not lower than 200. The molecular weight of the compound (b) of not higher than 10000, on the other hand, provides the higher compatibility of the compound (b) or the compound (B) with the polyamide resin (A) and accordingly has more significant advantageous effects of the embodiment of the invention. The molecular weight of the compound (b) is more preferably not higher than 6000 and is furthermore preferably not higher than 800.

The molecular weight of the compound (b) may be calculated by identifying the structural formula of the compound by a conventional analysis technique (for example, a combination of NMR, FT-IR, GC-MS and the like). When the compound (b) is a condensate, the molecular weight used is the weight-average molecular weight. The weight-average molecular weight (Mw) may be calculated by gel permeation chromatography (GPC). More specifically, the weight-average molecular weight may be measured by using a solvent in which the compound is dissolved, for example, hexafluoro-2-propanol, as a mobile phase, using polymethyl methacrylate (PMMA) as a standard material, using a column that is selected according to the solvent used, for example, "Shodex GPC HFIP-806M" and/or "Shodex GPC HFIP-LG" manufactured by Shimadzu GLC Ltd. in the case of using hexafluoro-2-propanol, and using a differential refractometer as a detector.

The branching degree of the compound (b) used according to the embodiment of the invention is not specifically limited but is preferably 0.05 to 0.70. This configuration further improves the heat aging resistance and the calcium chloride resistance. Using this compound (b) as the raw material of the compound (B) readily provides the branching degree of the compound (B) in the desired range. The branching degree is more preferably not lower than 0.10 and not higher than 0.35. The branching degree is defined by Expression (1) given above.

With regard to the compound (b) used according to the embodiment of the invention, the hydroxy value of a compound having three or more hydroxy groups (hereinafter may be referred to as "hydroxy group-containing compound") is preferably 100 to 2000 mg KOH/ g. The hydroxy value in this range further improves the heat aging resistance and the calcium chloride resistance. Using this compound (b) as the raw material of the compound (B) readily provides the hydroxy value of the resulting compound (B) in the above desired range. The hydroxy value of the hydroxy group-containing compound is more preferably not lower than 300 mg KOH/ g and not higher than 1800 mg KOH/ g. The hydroxy value may be determined by acetylation of the hydroxy group-containing compound with a mixed solution of acetic anhydride and anhydrous pyridine and titration with an ethanolic potassium hydroxide solution.

Concrete examples of the hydroxy group-containing compound include 1,2,4-butanetriol, 1,2,5-pentanetriol, 1,2,6-hexanetriol, 1,2,3,6-hexanetetraol, glycerol, diglycerol, triglycerol, tetraglycerol, pentaglycerol, hexaglycerol, ditrimethylolpropane, tritrimethylolpropane, pentaerythritol, dipentaerythritol, tripentaerythritol, methylglucoside, sorbitol, glucose, mannitol, sucrose, 1,3,5-trihydroxybenzene, 1,2,4-trihydroxybenzene, ethylene vinyl alcohol copolymer, polyvinyl alcohol, triethanolamine, trimethylolethane, trimethylolpropane, 2-methyl propanetriol, tris-hydroxymethyl aminomethane, and 2,-methyl-1,2,4-butanetriol. The hydroxy group-containing compound may be a hydroxy group-containing compound having a repeating structural unit and is, for example, a hydroxy group-containing compound having a repeating structural unit including an ester bond, an amide bond, an ether bond, a methylene bond, a vinyl bond, an imine bond, a siloxane bond, an urethane bond, a thioether bond, a silicon-silicon bond, a carbonate bond, a sulfonyl bond or an imide bond. The hydroxy group-containing compound may have a repeating structural unit including two or more different bonds among these bonds. The hydroxy group-containing compound having the repeating structural unit is more preferably a hydroxy group-containing compound having a repeating structural unit including an ester bond, a carbonate bond, an ether bond and/or an amide bond.

The hydroxy group-containing compound having the repeating structural unit including an ester bond may be obtained by, for example, a reaction of a compound having one or more hydroxy groups with a monocarboxylic acid having a carbon atom adjacent to a carboxy group that is a saturated carbon atom, having hydrogen atoms on this carbon atom all substituted, and having two or more hydroxy groups. The hydroxy group-containing compound having the repeating structural unit including an ether bond may be obtained by, for example, ring-opening polymerization of a compound having one or more hydroxy groups and a cyclic ether compound having one or more hydroxy groups. The hydroxy group-containing compound having the repeating structural unit including an ester bond and an amide bond may be obtained by, for example, polycondensation reaction of an amino diol with a cyclic acid anhydride. The hydroxy group-containing compound having the repeating structural unit including an amino group-containing ether bond may be obtained by, for example, intermolecular condensation of trialkanol amine. The hydroxy group-containing compound having the repeating structural unit including a carbonate bond may be obtained by, for example, polycondensation reaction of an aryl carbonate derivative of trisphenol.

Pentaerythritol, dipentaerythritol and tripentaerythritol are preferable among the hydroxy group-containing compounds.

With regard to the compound (b) used according to the embodiment of the invention, the amine value of a

compound having three or more amino groups (hereinafter may be referred to as "amino group-containing compound") is preferably 100 to 2000 mg KOH/ g. The amine value in this range further improves the heat aging resistance and the calcium chloride resistance. Using this compound (b) as the raw material of the compound (B) readily provides the amine value of the compound (B) in the desired range. The amine value of the amino group-containing compound is more preferably not lower than 200 mg KOH/ g and not higher than 1600 mg KOH/ g. The amine value may be determined by dissolution of the amino group-containing compound in ethanol and neutralization titration with an ethanolic hydrochloric acid solution.

Concrete examples of the amino group-containing compound include compounds having three amino groups such as 1,2,3-triaminopropane, 1,2,3-triamino-2-methylpropane and 1,2,4-triaminobutane; compounds having four amino groups such as 1,1,2,3-tetraaminopropane, 1,2,3-triamino-2-methylaminopropane, 1,2,3,4-tetraaminobutane and its isomers; compounds having five amino groups such as 3,6,9-triazaundecane-1,11-diamine; compounds having six amino groups such as 3,6,9,12-tetraazatetradecane-1,14-diamine, 1,1,2,2,3,3-hexaaminopropane, 1,1,2,3,3-pentaamino-2-methylaminopropane, 1,1,2,2,3,4-hexaminobutane and their isomers; and polyethylene imine obtained by polymerization of ethylene imine. The amino group-containing compound may be, for example, (i) a compound obtained by introducing an alkylene oxide unit into one of the above compounds having amino groups; or (ii) a compound obtained by a reaction of a compound having three or more hydroxy groups in one molecule, such as trimethylolpropane, pentaerythritol or dipentaerythritol, and/or this compound having a methyl-esterified hydroxy group with an alkylene oxide and subsequent amination of an end group.

The compound (b) used according to the embodiment of the invention may have another reactive functional group along with the hydroxy groups and/or the amino groups. Examples of another functional group include an aldehyde group, a sulfo group, an isocyanate group, an oxazoline group, an oxazine group, an ester group, an amide group, a silanol group and a silyl ether group.

The compound (b') used according to the embodiment of the invention preferably has two or more epoxy groups and/or two or more carbodiimide groups. This configuration readily provides the compound (B) having the number of epoxy groups and/or the number of carbodiimide groups in desired ranges. The compound (b') more preferably has four or more epoxy groups or four or more carbodiimide groups and furthermore preferably has six or more epoxy groups or six or more carbodiimide groups. The compound (b') may be a low-molecular compound or may be a polymer.

In the case of a low-molecular compound, the number of epoxy groups or the number of carbodiimide groups in one molecule of the compound (b') may be calculated by identifying the structural formula of the compound by a conventional analysis technique (for example, a combination of NMR, FT-IR, GC-MS and the like). In the case of a polymer, the number of epoxy groups or the number of carbodiimide groups in one molecule of the compound (b') may be calculated by dividing the number-average molecular weight of the compound (b') by an epoxy equivalent or a carbodiimide equivalent.

With regard to the compound (b') used according to the embodiment of the invention, concrete examples of the compound having the epoxy group (hereinafter may be referred to as "epoxy group-containing compound") include epichlorohydrin, glycidyl ether-type epoxy resins, glycidyl ester-type epoxy resins, glycidyl amine-type epoxy resins, alicyclic epoxy resins, heterocyclic epoxy resins, and glycidyl group-containing vinyl polymers. Two or more different resins among them may be used.

The glycidyl ether-type epoxy resin may be, for example, an epoxy resin produced from epichlorohydrin with bisphenol A, an epoxy resin produced from epichlorohydrin with bisphenol F, a phenol novolac epoxy resin obtained by a reaction of a novolac resin with epichlorohydrin, orthocresol novolac epoxy resin, a brominated epoxy resin derived from epichlorohydrin and tetrabromobisphenol A, glycerol triglycidyl ether, trimethylolpropane triglycidyl ether and pentaerythritol polyglycidyl ether.

The glycidyl ester-type epoxy resin may be, for example, an epoxy resin produced from epichlorohydrin and phthalic acid, tetrahydrophthalic acid, p-oxybenzoic acid or dimer acid, trimeric acid triglycidyl ester, trimellitic acid triglycidyl ester, and pyromellitic acid tetraglycidyl ester.

The glycidyl amine-type epoxy resin may be, for example, an epoxy resin produced from epichlorohydrin and aniline, diaminodiphenylmethane, p-aminophenol, meta-xylylene diamine or 1,3-bis(aminomethyl)cyclohexane, tetraglycidylaminodiphenylmethane, triglycidyl para-aminophenol, triglycidyl meta-aminophenol, tetraglycidyl meta-xylylene diamine, tetraglycidyl bis-aminomethyl cyclohexane, triglycidyl cyanurate, and triglycidyl isocyanurate.

The alicyclic epoxy resin may be, for example, a compound having a cyclohexene oxide group, a tricyclodecene oxide group or a cyclopentene oxide group. The heterocyclic epoxy resin may be, for example, an epoxy resin produced from epichlorohydrin and hydantoin or isocyanuric acid.

The glycidyl group-containing vinyl polymer may be, for example, a polymer obtained by radical polymerization of a raw material monomer forming a glycidyl group-containing vinyl unit. Concrete examples of the raw material monomer forming the glycidyl group-containing vinyl unit include glycidyl esters of unsaturated monocarboxylic acids such as glycidyl (meth)acrylate and glycidyl p-styrylcarboxylate; monoglycidyl ester or polyglycidyl ester of unsaturated polycarboxylic acids such as maleic acid and itaconic acid; and unsaturated glycidyl ethers such as allyl glycidyl ether, 2-methyl

allyl glycidyl ether and styrene-4-glycidyl ether.

Commercially available products of the epoxy group-containing compound include polyglycidyl ether compounds that are low-molecular multifunctional epoxy compounds (for example, "SR-TMP" manufactured by Sakamoto Yakuhin Kogyo Co., Ltd., and ""Denacol" (registered trademark) EX-521" manufactured by Nagase ChemteX Corporation); multifunctional epoxy compounds including polyethylene as a primary component (for example, ""BONDFAST" (registered trademark) E" manufactured by Sumitomo Chemical Co., Ltd.); multifunctional epoxy compounds including acrylic as a primary component (for example, ""RESEDA" (registered trademark) GP-301" manufactured by TOAGOSEI CO., LTD., ""ARUFON" (registered trademark) UG-4000" manufactured by TOAGOSEI CO., LTD., and ""METABLEN" (registered trademark) KP-7653 manufactured by Mitsubishi Chemical Corporation); multifunctional epoxy compounds including an acrylic-styrene copolymer as a primary component (for example, ""Joncryl" (registered trademark)- ADR-4368" manufactured by BASF and ""ARUFON" (registered trademark) UG-4040" manufactured by TOAGOSEI CO., LTD.); multifunctional epoxy compounds including a silicone-acrylic copolymer as a primary component (for example, ""METABLEN" (registered trademark) S-2200"); multifunctional epoxy compounds including polyethylene glycol as a primary component (for example, ""EPIOL" (registered trademark) E-1000" manufactured by NOF Corporation); bisphenol A-type epoxy resins (for example, ""jER" (registered trademark" 1004" manufactured by Mitsubishi Chemical Corporation); and novolac phenolic modified epoxy resins (for example, ""EPPN" (registered trademark) 201" manufactured by Nippon Kayaku Co., Ltd.)

With regard to the compound (b') used according to the embodiment of the invention, concrete examples of the compound having the carbodiimide group (hereinafter may be referred to as "carbodiimide group-containing compound") include dicarbodiimides such as N,N'-diisopropyl carbodiimide, N,N'-dicyclohexylcarbodiimide, and N,N'-di-2,6-diisopropylphenyl carbodiimide; and polycarbodiimides such as poly(1,6-hexamethylene carbodiimide), poly(4,4'-methylene-bis-cyclohexyl carbodiimide), poly(1,3-cyclohexylene carbodiimide), poly(1,4-cyclohexylene carbodiimide), poly(4,4'-dicyclohexylmethane carbodiimide), poly(4,4'-diphenylmethane carbodiimide), poly(3,3'-dimethyl-4,4'-diphenylmethane carbodiimide), poly(naphthalene carbodiimide), poly(p-phenylene carbodiimide), poly(m-phenylene carbodiimide), poly(tolyl carbodiimide), poly(diisopropyl carbodiimide), poly (methyl-diisopropylphenylene carbodiimide), poly(1,3,5-triisopropylbenzene) polycarbodiimide, poly(1,3,5-triisopropylbenzene) polycarbodiimide, poly(1,5-diisopropylbenzene) polycarbodiimide, poly(triethylphenylene carbodiimide) and poly(triisopropylphenylene carbodiimide).

Commercially available products of the carbodiimide group-containing compound include "CARBODILITE" (registered trademark) manufactured by Nisshinbo Holdings Inc., and "STABAXOL" (registered trademark) manufactured by LANXESS K.K.

The molecular weight of the compound (b') used according to the embodiment of the invention is not specifically limited but is preferably in a range of 800 to 10000. The molecular weight of the compound (b') of not lower than 800 causes the compound (B) to be less volatile in melt-kneading and accordingly ensures the good processability. This also increases the viscosity in melt-kneading, thus further increasing the compatibility of the compound (B) with the polyamide resin (A) and further improving the heat aging resistance and the calcium chloride resistance. The molecular weight of the compound (b') is more preferably not lower than 1000 and is furthermore preferably not lower than 2000. The molecular weight of the compound (b') of not lower than 2000 more effectively suppresses bleedout of the compound (B) or the compound (b) to a surface layer of a molded product in heat-moisture treatment and further improves the surface appearance. The molecular weight of the compound (b') of not higher than 10000, on the other hand, moderately suppresses the viscosity of the resulting compound (B) in melt-kneading and accordingly ensures the good processability. This also keeps the high compatibility of the compound (B) with the polyamide resin (A). The molecular weight of the compound (b') is more preferably not higher than 8000.

A value calculated by dividing the molecular weight of the compound (b') by the number of functional groups in one molecule is used as an index indicating a functional group concentration of the compound (b') according to the embodiment of the invention and is preferably 50 to 3000. The number of functional groups herein denotes a total number of the epoxy group and the carbodiimide group. The smaller value indicates the higher functional group concentration. The value of not less than 50 suppresses gelation due to an excessive reaction of the compound (b) with the compound (b'). This also moderately accelerates the reaction of the polyamide resin (A) with the compound (b) and thus improves the flowability, the melt stability, the mechanical strength, the heat aging resistance and the surface appearance. The value calculated by dividing the molecular weight of the compound (b') by the number of functional groups in one molecule is more preferably not less than 100 and is furthermore preferably not less than 1100. The value calculated by dividing the molecular weight of the compound (b') by the number of functional groups in one molecule of not less than 1100 more effectively suppresses bleedout of the compound (B) or the compound (b) to the surface layer of the molded product in heat-moisture treatment and further improves the surface appearance.

The value calculated by dividing the molecular weight of the compound (b') by the number of functional groups in one molecule of not greater than 3000, on the other hand, assures a sufficient reaction of the polyamide resin (A) and the hydroxy group- and/or amino group-containing compound. This further improves the flowability, the melt stability, the mechanical strength, the heat aging resistance and the surface appearance. From this point of view, the value

calculated by dividing the molecular weight of the compound (b') by the number of functional groups in one molecule is preferably not greater than 2000, is more preferably not greater than 1000 and is furthermore preferably not greater than 300.

The molecular weight of the compound (b') may be calculated by identifying the structural formula of the compound by a conventional analysis technique (for example, a combination of NMR, FT-IR, GC-MS and the like). When the epoxy group- and/or carbodiimide group-containing compound is a condensate, the molecular weight used is the weight-average molecular weight. The weight-average molecular weight (Mw) may be calculated by gel permeation chromatography (GPC). More specifically, the weight-average molecular weight may be measured by using a solvent in which the compound is dissolved, for example, hexafluoro-2-propanol, as a mobile phase, using polymethyl methacrylate (PMMA) as a standard material, using a column that is selected according to the solvent used, for example, "Shodex GPC HFIP-806M" and/or "Shodex GPC HFIP-LG" manufactured by Shimadzu GLC Ltd. in the case of using hexafluoro-2-propanol, and using a differential refractometer as a detector.

The compound (b') used according to the embodiment of the invention is preferably a solid at 25°C or a liquid having a viscosity of not lower than 200 mPa·s at 25°C. This configuration readily provides the viscosity in a desired range in melt-kneading of the resulting compound (B), further increases the compatibility of the compound (B) with the polyamide resin (A) and further improves the heat aging resistance and the calcium chloride resistance.

According to the embodiment of the invention, the compound (B) is preferably a compound having a structure shown by General Formula (3) given below and/or its condensate:

[Chem. 1]

[Chem. 1]

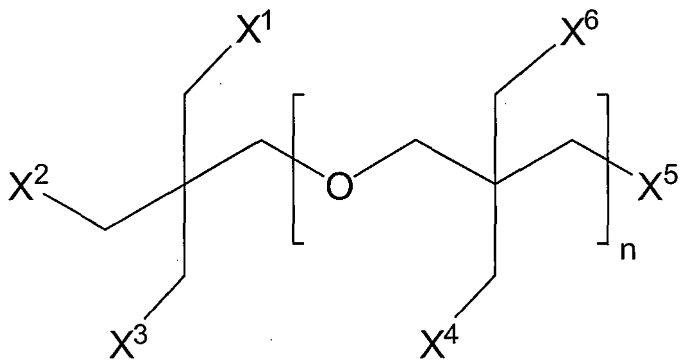

(3)

In General Formula (3) given above, $X^1$ to $X^6$ may be identical or different and represent OH, $NH_2$, $CH_3$ or OR. A total number of OH, $NH_2$ and OR is three or more. R represents an organic group including an amino group, an epoxy group or a carbodiimide group, and n denotes a range of 0 to 20.

In General Formula (3), R represents an organic group including an amino group, an organic group including an epoxy group or an organic group including a carbodiimide group. The organic group including the amino group may be, for example, an alkylamino group or a cycloalkylamino group that may have a substituent. The substituent may be, for example, an alkylene oxide group or an aryl group. The organic group including the epoxy group may be, for example, an epoxy group, a glycidyl group, a glycidyl ether-type epoxy group, a glycidyl ester-type epoxy group, a glycidyl amine-type epoxy group, an epoxy group- or glycidyl group-substituted hydrocarbon group, or an epoxy group- or glycidyl group-substituted heterocyclic group. Two or more different groups among these groups may be used.

The organic group including the carbodiimide group may be, for example, an alkyl carbodiimide group, a cycloalkyl carbodiimide group or an arylalkyl carbodiimide group.

In General Formula (3), n denotes the range of 0 to 20. The number n of not greater than 20 suppresses plasticization of the polyamide resin (A) and further improves the heat aging resistance and the calcium chloride resistance. The number n of not greater than 4 is more preferable and furthermore improves the heat aging resistance and the calcium chloride resistance. The number n of not less than 1 is, on the other hand, more preferable and enhances the molecular mobility of the compound (B) to furthermore improve the compatibility with the polyamide resin (A).

In General Formula (3), the total number of OH, $NH_2$ and OR is three or more. This configuration provides the good compatibility with the polyamide resin (A) and further improves the heat aging resistance and the calcium chloride resistance. In the case of a low-molecular compound, the total number of OH, $NH_2$ and OR may be calculated by

identifying the structural formula of the compound by a conventional analysis technique (for example, a combination of NMR, FT-IR, GC-MS and the like).

In the case of a condensate, the number of OH or $NH_2$ may be determined according to Expression (2) given above after calculation of the number-average molecular weight and the hydroxy value or the amine value of the compound having the structure shown by General Formula (3) and/or its condensate.

In the case of a condensate, the number of OH may be calculated by dividing the number-average molecular weight of the compound having the structure shown by General Formula (3) and/or its condensate by an amine equivalent, an epoxy equivalent or a carbodiimide equivalent. The number-average molecular weight of the compound having the structure shown by General Formula (3) and/or its condensate may be calculated by gel permeation chromatography (GPC). More specifically, the number-average molecular weight may be calculated by a method described below. The number-average molecular weight may be measured by using a solvent in which the compound having the structure shown by General Formula (3) and/or its condensate is dissolved, for example, hexafluoro-2-propanol, as a mobile phase, using polymethyl methacrylate (PMMA) as a standard material, using a column that is selected according to the solvent used, for example, "Shodex GPC HFIP-806M" and/or "Shodex GPC HFIP-LG" manufactured by Shimadzu GLC Ltd. in the case of using hexafluoro-2-propanol, and using a differential refractometer as a detector.

According to the embodiment of the invention, the content of the compound (b) and/or the compound (B) in the resin composition is preferably 0.1 to 20 parts by weight relative to 100 parts by weight of the polyamide resin (A). The content of the compound (b) and/or the compound (B) means the content of either the compound (b) or the compound (B) when the resin composition includes only either the compound (b) or the compound (B), while meaning the total content of the compound (b) and the compound (B) when the resin composition includes both. The content of the compound (b) and/or the compound (B) of not less than 0.1 parts by weight accelerates the reaction with the end group of the polyamide resin during heat treatment, thus further promoting formation of the shield layer and enabling the value Q-P and the value S-T to be readily adjusted in the desired ranges described above. This further improves the heat aging resistance and the calcium chloride resistance. The content of the compound (b) and/or the compound (B) is more preferably not less than 2.5 parts by weight. The content of the compound (b) and/or the compound (B) of not greater than 20 parts by weight, on the other hand, further improves the dispersibility of the compound (b) and/or the compound (B) in the polyamide resin composition. This suppresses plasticization and oxidation degradation of the polyamide resin (A) and enables the value Q-P and the value S-T to be readily adjusted in the desired ranges described above. As a result, this further improves the heat aging resistance and the calcium chloride resistance. The content of the compound (b) and/or the compound (B) is more preferably not greater than 10 parts by weight.

The manufacturing method of the compound (B) used according to the embodiment of the invention is not specifically limited. A preferable method dry-blends the compound (b) and the compound (b') described above and melt-kneads the dry-blended mixture at a temperature higher than the melting points of both the components.

It is preferable to add a catalyst, with a view to accelerating the reaction of the hydroxy group and/or the amino group with the epoxy group and/or the carbodiimide group. The added amount of the catalyst is not specifically limited but is preferably 0 to 1 part by weight and is more preferably 0.01 to 0.3 parts by weight relative to a total of 100 parts by weights of the compound (b) and the compound (b').

The catalyst of accelerating the reaction of the hydroxy group with the epoxy group may be, for example, phosphines, imidazoles, amines and diazabicyclo compounds. A concrete example of the phosphine is triphenylphosphine (TPP). Concrete examples of the imidazole include 2-heptadecylimidazole (HDI), 2-ethyl-4-methyl-imidazole, 1-benzyl-2-methylimidazole and 1-isobutyl-2-methylimidazole. Concrete examples of the amine include N-hexadecylmorpholine (HDM), triethylenediamine, benzyldimethylamine (BDMA), tributylamine, diethylamine, triethylamine, tris-dimethylamino-methylphenol, and tetramethylethylenediamine. Concrete examples of the diazabicyclo compound include 1,8-diazabicyclo(5,4,0)-undec-7-ene (DBU), 1,5-diazabicyclo(4,3,0)-non-5-ene (DBN), N,N-dimethylcyclohexylamine, and 1,4-diazabicyclo-(2,2,2)-octane (DABCO).

The catalyst accelerating the reaction of the hydroxy group with the carbodiimide group may be, for example, trialkyl lead alkoxide, fluoroboric acid, zinc chloride or sodium alkoxide.

Melt-kneading of the compound (b) and the compound (b') caus es a reaction of the hydroxy group and/or the amino group in the compound (b) with the epoxy group and/or the carbodiimide group in the compound (b'). When the compound (b) is a hydroxy group-containing compound, a dehydration condensation reaction also proceeds in the hydroxy group-containing compound. This provides the compound (B) of the multi-branched structure.

In the case of production of the compound (B) by the reaction of the compound (b) with the compound (b'), the composition ratio is not specifically limited. It is, however, preferable to blend these compounds such that the total number of the hydroxy group and the amino group in one molecule of the compound (B) is larger than the total number of the epoxy group and the carbodiimide group in one molecule of the compound (B) and/or its condensate. Compared with the hydroxy group and the amino group, the epoxy group and the carbodiimide group have the better reactivity with the end group of the polyamide resin (A). Accordingly, the configuration that the total number of the hydroxy group and the amino group in one molecule of the compound (B) is larger than the total number of the epoxy group and the carbodiimide

group in one molecule of the compound (B) suppresses embrittlement due to excessive formation of the crosslinking structure and thereby further improves the heat aging resistance and the calcium chloride resistance.

The weight ratio ((b)/ (b')) of the compound (b) to the compound (b') to be reacted is preferably not less than 0.3 and less than 10000. The reactivity of the polyamide resin (A) with the compound (b') and the reactivity of the compound (b) with the compound (b') are higher than the reactivity of the polyamide resin (A) with the compound (b). Accordingly, the weight ratio ((b)/ (b')) of not less than 0.3 suppresses gelation due to an excessive reaction and further improves the heat aging resistance and the calcium chloride resistance.

In the case of production of the compound (B) by the reaction of the compound (b) with the compound (b'), the reaction rate of the hydroxy group and/or the amino group with the epoxy group and/or the carbodiimide group is preferably 1 to 95%. The reaction rate of not lower than 1% increases the branching degree of the compound (B), decreases the autoagglutination force, and increases the reactivity with the polyamide resin (A). This accordingly further improves the heat aging resistance and the calcium chloride resistance. The reaction rate is more preferably not lower than 10% and is furthermore preferably not lower than 20%. The reaction rate of not higher than 95%, on the other hand, enables the epoxy group or the carbodiimide group to appropriately remain and increases the reactivity with the polyamide resin (A). The reaction rate is more preferably not higher than 90% and is more preferably not higher than 70%.

The reaction rate of the hydroxy group and/or the amino group with the epoxy group and/or the carbodiimide group may be determined by a method described below. In the case of the epoxy group, the reaction rate may be calculated by dissolving the compound (B) in a solvent (for example, deuterated dimethyl sulfoxide or deuterated hexafluoro-2-propanol) and determining a decreased amount before and after the reaction with the compound (b) with respect to an epoxy ring-derived peak by $^1$H-NMR measurement. In the case of the carbodiimide group, the reaction rate may be calculated by determining a decreased amount before and after the reaction with the compound (b) with respect o a carbodiimide group-derived peak by $^{13}$C-NMR measurement. The reaction rate may be determined according to Expression (4) given below:

$$\text{reaction rate } (\%) = \{1 - (h/g)\} \times 100 \qquad (4)$$

In Expression (4), g denotes a peak area of the dry-blended mixture of the compound (b) with the compound (b'); and h denotes a peak area of the compound (B).

The resin composition used according to the embodiment of the invention further includes a phosphorus-containing compound (C), namely sodium hypophosphite. A phosphorus-containing compound such as sodium hypophosphite is generally used as a polycondensation catalyst in the process of polycondensation of polyamide and is known to have the effects of shortening the polymerization time and suppressing yellow discoloration. Addition of the phosphorus-containing compound to the polyamide resin in the process of compounding, on the other hand, accelerates condensation of the polyamide resin in the melt-kneading process, while providing the effect of suppressing yellow discoloration. This causes problems of increasing the viscosity of the polyamide resin and decreasing the flowability of the polyamide resin. According to the embodiment of the invention, on the other hand, including the phosphorus-containing compound (C) in addition to the compound (b) and/or the compound (B) provides a molded product having the excellent heat aging resistance and the calcium chloride resistance of the polyamide resin composition. This is because the phosphorus-containing compound (C) serves to further enhance the reactivity and the compatibility of the polyamide resin (A) with the compound (b) and/or the compound (B) rather than self-condensation of the polyamide resin (A) and further improve the dispersibility of the compound (b) and/or the compound (B) in the polyamide resin composition. As a result, this further enhances the reactivity of the polyamide resin (A) with the compound (b) and/or the compound (B) during heat treatment and accelerates formation of the shield layer during heat treatment, thus enabling the value Q-P and the value S-T to be readily adjusted in the desired ranges described above. This accordingly further improves the heat aging resistance and the calcium chloride resistance.

In the polyamide resin composition according to the embodiment of the invention, the phosphorous atom content of the phosphorus-containing compound (C) is 1000 to 3500 ppm relative to the content of the polyamide resin (A) in terms of phosphorus atom (on the weight basis). The phosphorus atom content denotes a concentration of phosphorus element determined by absorption spectrophotometry described later. In the polyamide resin composition according to the invention, the content of the phosphorus-containing compound (C) is 1000 to 3500 ppm relative to the content of the polyamide resin (A) in terms of phosphorus atom (on the weight basis). The concentration in terms of phosphorus atom of not lower than 280 ppm suppresses oxidation degradation of the polyamide resin (A) and enables the value Q-P and the value S-T to be readily adjusted in the desired ranges described above. This accordingly further improves the heat aging resistance and the calcium chloride resistance. The concentration in terms of phosphorus atom of the phosphorus-containing compound (C) is not lower than 1000 ppm, relative to the content of the polyamide resin (A). The content in terms of phosphorus atom of higher than 3500 ppm, on the other hand, significantly increases the viscosity

of the polyamide resin (A) and decreases the flowability. This also accelerates decomposition of the polyamide resin (A) and the compound (b) and/or the compound (B) by means of a gas generated in decomposition of the phosphorus-containing compound (C) by shear heating, so as to reduce the melt stability, the heat aging resistance and the mechanical strength. Additionally, this increases the possibility of bleedout of the phosphorus-containing compound (C) to a surface layer of a molded product and deteriorates the surface appearance and the color tone. The content of the phosphorus-containing compound (C) is preferably not higher than 3000 ppm in terms of phosphorus atom, relative to the content of the polyamide resin (A).

The phosphorus atom content may be determined by a method described below. An inorganic substance content in the polyamide resin composition or its molded product is determined by drying the polyamide resin composition or its molded product under reduced pressure and heating the dried polyamide resin composition or molded product in an electric oven at 550°C for 24 hours to be ashed. When the polyamide resin composition or its molded product includes a resin component other than the polyamide resin (A), for example, an impact modifier, the compound (b) and/or the compound (B), the phosphorus-containing compound (C) and other additives, the weight of the polyamide resin (A) or the weight of the components other than the polyamide resin (A) is measured by extraction separation using an organic solvent, and the content of the polyamide resin (A) in the polyamide resin composition or its molded product is calculated. Phosphorus is converted to orthophosphoric acid by dry ashing decomposition of the polyamide resin composition or its molded product in coexistence of sodium carbonate or by wet decomposition of the polyamide resin composition or its molded product in a sulfuric acid/ nitric acid/ perchloric acid system or in a sulfuric acid/ hydrogen peroxide solution system. Phosphomolybdic acid is then obtained by reaction of orthophosphoric acid with a molybdate in a 1 mol/L sulfuric acid solution. The phosphorus content in the polyamide resin composition is calculated by reducing the obtained phosphomolybdic acid with hydrazine sulfate, measuring the absorbance of a generated heteropoly blue at 830 nm by an absorptiometer (calibration curve method), and performing colorimetric determination. The phosphorus atom content relative to the polyamide resin is determined by dividing the phosphorus content calculated by colorimetric determination by the content of the polyamide resin calculated in advance.

A phosphorus-containing compound (C) may be, for example, a phosphite compound, a phosphate compound, a phosphonite compound, a phosphonate compound, a phosphinite compound, or a phosphinate compound. The phosphorus-containing compound (C) may include two or more different compounds among these compounds.

The phosphite compound may be, for example, phosphorous acid, an alkyl ester of phosphorous acid, an aryl ester of phosphorous acid or a metal salt thereof. The alkyl ester or the aryl ester may be a monoester or may have a plurality of ester bonds like a diester or a trimester. The same applies hereinafter. Concrete examples include phosphorous acid, trimethyl phosphite, triethyl phosphite, triphenyl phosphite, bis(2,6-di-tert-butyl-4-methylphenyl)pentaerythritol-di-phosphite, bis(2,4-di-tert-butylphenyl)pentaerythritol-di-phosphite and their metal salts. The metal salts will be described later.

The phosphate compound may be, for example, phosphoric acid, an alkyl ester of phosphoric acid, an aryl ester of phosphoric acid, or a metal salt thereof. Concrete examples include phosphoric acid, trimethyl phosphate, triethyl phosphate, triphenyl phosphate and their metal salts.

The phosphonite compound may be, for example, phosphonous acid, an alkyl ester of phosphonous acid, an aryl ester of phosphonous acid, alkylated phosphonous acid, arylated phosphonous acid, an alkyl ester or an aryl ester thereof, or a metal salt thereof. Concrete examples include phosphonous acid, dimethyl phosphonite, diethyl phosphonite, diphenyl phosphonite, methylphosphonous acid, ethylphosphonous acid, propylphosphonous acid, isopropylphosphonous acid, butylphosphonous acid, phenylphosphonous acid, tetrakis(2,4-di-t-butylphenyl)[1,1-biphenyl]-4,4'-diylbisphosphonite, te(2,4-di-t-butyl-5-methylphenyl)[1,1-biphenyl]4,4'-diylbisphosphonite, their alkyl esters and aryl esters, and their metal salts.

The phosphonate compound may be, for example, phosphonic acid, an alkyl ester of phosphonic acid, an aryl ester of phosphonic acid, alkylated phosphonic acid, arylated phosphonic acid, an alkyl ester or an aryl ester thereof, or a metal salt thereof. Concrete examples include dimethyl phosphonate, diethyl phosphonate, diphenyl phosphonate, methylphosphonic acid, ethylphosphonic acid, propylphosphonic acid, isopropylphosphonic acid, butylphosphonic acid, phenylphosphonic acid, benzylphosphonic acid, tolylphosphonic acid, xylylphosphonic acid, biphenylphosphonic acid, naphthylphosphonic acid, anthrylphosphonic acid, their alkyl esters and aryl esters, and their metal salts.

The phosphinite compound may be, for example, phosphinous acid, an alkyl ester of phosphinous acid, an aryl ester of phosphinous acid, alkylated phosphinous acid, arylated phosphinous acid, an alkyl or an aryl ester thereof, or a metal salt thereof. Concrete examples include phosphinous acid, methyl phosphinite, ethyl phosphinite, phenyl phosphinite, methylphosphinous acid, ethylphosphinous acid, propylphosphinous acid, isopropylphosphinous acid, butylphosphinous acid, phenylphosphinous acid, dimethylphosphinous acid, diethylphosphinous acid, dipropylphosphinous acid, diisopropylphosphinous acid, dibutylphosphinous acid, diphenylphosphinous acid, their alkyl esters and aryl esters, and their metal salts.

The phosphinate compound may be, for example, hypophosphorous acid, an alkyl ester of hypophosphorous acid, an aryl ester of hypophosphorous acid, alkylated hypophosphorous acid, arylated hypophosphorous acid, an alkyl

ester or an aryl ester thereof, or a metal salt thereof. Concrete examples include methyl phosphinate, ethyl phosphinate, phenyl phosphinate, methylphosphinic acid, ethylphosphinic acid, propylphosphinic acid, isopropylphosphinic acid, butylphosphinic acid, phenylphosphinic acid, tolylphosphinic acid, xylylphosphinic acid, biphenylylphosphinic acid, dimethylphosphinic acid, diethylphosphinic acid, dipropylphosphinic acid, diisopropylphosphinic acid, dibutylphosphinic acid, diphenylphosphinic acid, ditolylphosphinic acid, dixylylphosphinic acid, dibiphenylylphosphinic acid, naphthylphosphinic acid, anthrylphosphinic acid, 2-carboxylphenylphosphinic acid, their alkyl esters and aryl esters, and their metal salts.

Among them, the phosphite compound and the phosphinate compound are preferable. These compounds may be hydrates. It is further preferable to include at least one selected from the group consisting of phosphorous acid, hypophosphorous acid and their metal salts. Including such a compound further increases the reaction rate of the compound (b) and/or the compound (B), while suppressing an increase in viscosity of the polyamide resin (A). As a result, this further improves the heat aging resistance, the calcium chloride resistance, the surface appearance and the color tone of the resulting molded product.

The metal of the metal salts may be, for example, an alkali metal such as lithium, sodium or potassium or an alkaline earth metal such as magnesium, calcium or barium. Among them, sodium and calcium are preferable.

Concrete examples of the metal salt of phosphorous acid or hypophosphorous acid include lithium phosphite, sodium phosphite, potassium phosphite, magnesium phosphite, calcium phosphite, barium phosphite, lithium hypophosphite, sodium hypophosphite, potassium hypophosphite, magnesium hypophosphite, calcium hypophosphite and barium hypophosphite. Among them, sodium metal salts such as sodium phosphite and sodium hypophosphite and calcium metal salts such as calcium phosphite and calcium hypophosphite are more preferable. These metal salts further increase the reaction rate of the compound (b) and/or the compound (B), while suppressing an increase in viscosity of the polyamide resin (A). As a result, these metal salts further improve the heat aging resistance, the calcium chloride resistance and the color tone of the resulting molded product. In the present invention the resin composition comprises sodium hypophosphite.

The resin composition used according to the embodiment of the invention may further include a copper compound. The copper compound is expected to coordinate with the hydroxy group or the hydroxide ion of the compound (b) and/or the compound (B), in addition to coordinating with the amide group of the polyamide resin (A). Accordingly, the copper compound is expected to have the effect of enhancing the compatibility of the polyamide resin (A) with the compound (b) and/or the compound (B).

The resin composition used according to the embodiment of the invention may further include a potassium compound. The potassium compound suppresses release or deposition of copper. Accordingly, the potassium compound is expected to have the effect of accelerating the reaction of the copper compound, the compound (b) and/or the compound (B) and the polyamide resin (A).

The copper compound may be, for example, copper chloride, copper bromide, copper iodide, copper acetate, copper acetylacetonate, copper carbonate, copper fluoroborate, copper citrate, copper hydroxide, copper nitrate, copper sulfate and copper oxalate. The copper compound may include two or more different copper compounds among these copper compounds. Among these copper compounds, industrially available copper compounds are preferable, and copper halides are preferable. Examples of the copper halide include copper iodide, copper(I) bromide, copper(II) bromide, and copper(I) chloride. Copper iodide is more preferable as the copper halide.

The potassium compound may be, for example, potassium iodide, potassium bromide, potassium chloride, potassium fluoride, potassium acetate, potassium hydroxide, potassium carbonate or potassium nitrate. The potassium compound may include two or more different potassium compounds among these potassium compounds. Among these potassium compounds, potassium iodide is preferable. Including the potassium compound further improves the surface appearance, the weather resistance and the mold corrosion resistance of the molded product.

According to the embodiment of the invention, the content (on the weight basis) of the copper element in the resin composition is preferably 25 to 200 ppm. The content of the copper element of not lower than 25 ppm further enhances the compatibility of the polyamide resin (A) with the compound (b) and/or the compound (B) and further improves the heat aging resistance and the calcium chloride resistance. The content (on the weight basis) of the copper element in the resin composition is preferably not lower than 80 ppm. The content of the copper element of not higher than 200 ppm, on the other hand, suppresses coloration due to deposition or release of a copper compound and further improves the surface appearance of a molded product. The content of the copper element of not higher than 200 ppm also suppresses reduction of the hydrogen bonding strength of the amide group caused by excessive coordinate bond of the polyamide resin with copper and further improves the heat aging resistance. The content (on the weight basis) of the copper element in the resin composition is preferably not higher than 190 ppm. The content of the copper element in the resin composition may be adjusted to the desired range described above by appropriately regulating the amount of the copper compound added.

The content of the copper element in the resin composition may be determined by a method described below. Pellets of the resin composition are dried under reduced pressure and are then ashed in an electric oven at 550°C for 24 hours. The obtained ash is heated for wet degradation after addition of concentrated sulfuric acid, and a resulting

degradation solution is diluted. The copper content is determined by atomic absorption analysis (calibration curve method) of the diluted solution.

A ratio Cu/K of the content of the copper element to the content of the potassium element in the resin composition is preferably 0.21 to 0.43. The ratio Cu/K is an index indicating the degree of suppression of deposition or release of copper. The smaller ratio more effectively suppresses deposition or release of copper and more effectively accelerates the reaction of the copper compound, the compound (b) and/or the compound (B), and the polyamide resin (A). The ratio Cu/K of not higher than 0.43 suppresses deposition or release of copper and further improves the surface appearance of a molded product. The ratio Cu/K of not higher than 0.43 also enhances the compatibility of the resin composition and thereby further improves the heat aging resistance and the calcium chloride resistance. The ratio Cu/K of not lower than 0.21, on the other hand, enhances the dispersibility of the potassium-containing compound and reduces the possibility of aggregation of even deliquescent potassium iodide, thus enhancing the effect of suppressing deposition or release of copper. This sufficiently accelerates the reaction of the copper compound, the compound (b) and/or the compound (B), and the polyamide resin (A) and further improves the heat aging resistance of the molded product. The content of the potassium element in the resin composition may be determined by a similar method to the method of determining the copper content described above.

The resin composition used for the molded product according to the embodiment of the invention may additionally include a filler. The filler used may be either an organic filler or an inorganic filler and may be either a fibrous filler or a non-fibrous filler. The fibrous filler is preferable as the filler.

The fibrous filler may be a fibrous or a whisker filler, for example, glass fibers, PAN (polyacrylonitrile)-based and pitch-based carbon fibers, metal fibers such as stainless steel fibers, aluminum fibers and brass fibers, organic fibers such as aromatic polyamide fibers, gypsum fibers, ceramic fibers, asbestos fibers, zirconia fibers, alumina fibers, silica fibers, titanium oxide fibers, silicon carbide fibers, rock wool, potassium titanate whiskers, zinc oxide whiskers, calcium carbonate whiskers, wollastonite whiskers, aluminum borate whiskers and silicon nitride whiskers. The glass fiber or the carbon fiber is especially preferable as the fibrous filler.

The type of the glass fibers is not specifically limited but may be any glass fiber that is generally used for reinforcement of the resin, for example, a long fiber type or a short fiber type such as chopped strand or milled fiber. The glass fiber may be coated with or bundled by a thermoplastic resin such as ethylene/ vinyl acetate copolymer or a thermosetting resin such as epoxy resin. Additionally, the cross section of the glass fiber is not limited but is, for example, in a circular shape, a flat gourd-shape, a cocoon-shape, an oval shape, an elliptical shape, a rectangular shape or any of their analogous shapes. In terms of reducing the specific warpage of a molded product which a glass fiber-blended resin composition is likely to have, the flat fiber is preferable and the ratio of the major axis/ minor axis of the flat fiber is preferably not less than 1.5 and more preferably not less than 2.0 and is preferably not greater than 10 and more preferably not greater than 6.0. The ratio of the major axis/ minor axis of less than 1.5 has little effect of the flat cross section, whereas the ratio of the major axis/ minor axis of greater than 10 has difficulty in production of the glass fiber itself.

Examples of the non-fibrous filler include non-swellable silicates such as talc, wollastonite, zeolite, sericite, mica, kaolin, clay, pyrophyllite, bentonite, asbestos, alumina silicate and calcium silicate; swellable layered silicates typified by swellable mica such as Li-type fluorine taeniolite, Na-type fluorine taeniolite, Na-type tetrasilicon fluorine mica and Li-type tetrasilicon fluorine mica; metal oxides such as silicon oxide, magnesium oxide, alumina, silica, diatomaceous earth, zirconium oxide, titanium oxide, iron oxide, zinc oxide, calcium oxide, tin oxide and antimony oxide; metal carbonates such as calcium carbonate, magnesium carbonate, zinc carbonate, barium carbonate, dolomite, and hydrotalcite; metal sulfates such as calcium sulfate and barium sulfate; metal hydroxides such as magnesium hydroxide, calcium hydroxide, aluminum hydroxide and basic magnesium carbonate; various clay minerals such as smectite clay minerals like montmorillonite, beidellite, nontronite, saponite, hectorite, and sauconite, vermiculite, halloysite, kanemite and kenyaite; glass beads; glass flakes; ceramic beads; boron nitride; aluminum nitride; silicon carbide; carbon black; and graphite. The above swellable layered silicate may have organic onium ions that replaces exchangeable cations present between layers. The organic onium ion may be, for example, ammonium ion, phosphonium ion or sulfonium ion. The resin composition may include two or more different fillers among these fillers.

The surface of the above filler may be treated with a known coupling agent (for example, a silane-based coupling agent or a titanate-based coupling agent) or with a known sizing agent (for example, carboxylic acid-based, epoxy-based or urethane-based). Such treatment further improves the mechanical strength and the surface appearance of the molded product. An epoxy sizing agent is preferable as the sizing agent. For example, in the case of treatment with a coupling agent, a preferable method of treatment of the filler performs surface treatment of the filler in advance with the coupling agent by an ordinary procedure and subsequently melt-kneads the surface-treated filler with the polyamide resin. Another available method is an integral blending method that adds a coupling agent in the the process of melt-kneading the filler with the polyamide resin without previously performing surface treatment of the filler. The amount of the coupling agent used for the treatment is preferably not less than 0.05 parts by weight and is more preferably not less than 0.5 parts by weight relative to 100 parts by weight of the filler. The amount of the coupling agent used for the treatment is, on the other hand, preferably not greater than 10 parts by weight and is more preferably not greater than 3 parts by weight

relative to 100 parts by weight of the filler.

According to the embodiment of the invention, the content of the filler in the resin composition is preferably 1 to 150 parts by weight relative to 100 parts by weight of the polyamide resin (A). The content of the filler of not less than 1 part by weight further improves the mechanical strength and the heat aging resistance of a molded product. The content of the filler is more preferably not less than 20 parts by weight. The content of the filler of not greater than 100 parts by weight, on the other hand, suppresses floating of the filler to the surface of a molded product and provides the molded product having the better surface appearance. The content of the filler is more preferably not greater than 70 parts by weight.

According to the embodiment of the invention, the resin composition may additionally include a resin other than the polyamide resin and various additives for various purposes in such a range that does not damage the advantageous effects of the embodiment of the invention.

Concrete examples of the resin other than the polyamide resin include polyester resin, polyolefin resin, modified polyphenylene ether resin, polysulfone resin, polyketone resin, polyetherimide resin, polyarylate resin, polyethersulfone resin, polyether ketone resin, polythioether ketone resin, polyether ether ketone resin, polyimide resin, polyamide imide resin and polytetrafluoroethylene resin. When the resin composition includes such a resin, with a view to taking full advantage of the characteristics of the polyamide resin, the content is preferably not greater than 30 parts by weight and is more preferably not greater than 20 parts by weight relative to 100 parts by weight of the polyamide resin (A).

Concrete examples of the various additives include a heat stabilizer other than the copper compound; a coupling agent such as an isocyanate compound, an organosilane compound, an organotitanate compound, an organoborane compound or an epoxy compound; a plasticizer such as a polyalkylene oxide oligomer compound, a thioether compound or an ester compound; a nucleating agent such as polyether ether ketone; a metal soap such as montanic acid wax, lithium stearate or aluminum stearate; a mold release agent such as ethylene diamine/ stearic acid/ sebacic acid polycondensate or a silicone compound; a lubricant; an ultraviolet protective agent; a coloring agent; a flame retardant; an impact modifier and a foaming agent. When the resin composition includes such an additive, with a view to taking full advantage of the characteristics of the polyamide resin, the content is preferably not greater than 10 parts by weight and is more preferably not greater than 1 part by weight relative to 100 parts by weight of the polyamide resin (A).

The heat stabilizer other than the copper compound may be, for example, a phenolic compound, a sulfur compound or an amine compound. Two or more different compounds among these compounds may be used as the heat stabilizer other than the copper compound.

A hindered phenolic compound is preferably used as the phenolic compound: more specifically, N,N'-hexamethylene-bis(3,5-di-t-butyl-4-hydroxy-hydrocinnamide) or tetrakis[methylene-3-(3',5'-di-t-butyl-4'-hydroxyphenyl)propionate] methane may be preferably used.

The sulfur compound may be, for example, an organic thioacid compound, a mercaptobenzimidazole compound, a dithiocarbamate compound or a thiourea compound. Among these sulfur compounds, the mercaptobenzimidazole compound and the organic thioacid compound are preferable. Especially, a thioether compound having a thioether structure receives oxygen from an oxidized substance to be reduced and is thus preferably used as the heat stabilizer. Concrete examples of the preferable thioether compound include 2-mercaptobenzimidazole, 2-mercaptomethylbenzimidazole, di(tetradecyl) thiodipropionate, di(octadecyl) thiodipropionate, pentaerythritol tetrakis(3-dodecyl thiopropionate) and pentaerythritol tetrakis(3-lauryl thiopropionate). More preferable are pentaerythritol tetrakis(3-dodecyl thiopropionate) and pentaerythritol tetrakis(3-lauryl thiopropionate). The molecular weight of the sulfur compound is generally not less than 200 and is preferably not less than 500, and its upper limit is generally 3000.

As the amine compound, preferable are a compound having a diphenylamine skeleton, a compound having a phenylnaphthylamine skeleton and a compound having a dinaphthylamine skeleton. More preferable are the compound having the diphenylamine skeleton and the compound having the phenylnaphthylamine skeleton. Among these amine compounds, more preferable are 4,4'-bis($\alpha$,$\alpha$-dimethylbenzyl)diphenylamine, N,N'-di-2-naphthyl-p-phenylenediamine and N,N'-diphenyl-p-phenylenediamine. Especially preferable are N,N'-di-2-naphthyl-p-phenylenediamine and 4,4'-bis($\alpha$,$\alpha$-dimethylbenzyl)diphenylamine.

A preferable combination of the sulfur compound and the amine compound is pentaerythritol tetrakis(3-lauryl thiopropionate) and 4,4'-bis($\alpha$,$\alpha$-dimethylbenzyl)diphenylamine.

According to the embodiment of the invention, for example, a method using the preferable resin composition described above or a method using a resin composition obtained by a preferable manufacturing method described later may be employed to adjust the values Q-P, R, S and S-T in the above ranges. In terms of the composition, for example, an employed method may form a shield layer that has a dense network structure on the surface of a molded product to suppress oxidation degradation by using a resin composition including the polyamide resin (A) having the water content in the desired range as described above, including the compound (b) and/or the compound (B) or including the phosphorus-containing compound (C). In terms of the manufacturing method of the resin composition, for example, an employed method may form a shield layer that has a dense network structure on the surface of a molded product by increasing the resin pressure in melt-kneading by selection of a kneading temperature and a screw arrangement or by

preparing a high concentration premixture of the polyamide resin (A) and the compound (b) and/or the compound (B) and subsequently melt-kneading the premixture with the polyamide resin (A).

According to the embodiment of the invention, the manufacturing method of the resin composition is not specifically limited, but manufacturing in the molten state or manufacturing in the solution state may be employed. In terms of the enhanced reactivity, manufacturing in the molten state is preferably employed. For example, melt-kneading with an extruder or a melt-kneading with a kneader may be employed for manufacturing in the molten state. In terms of the productivity, melt-kneading with an extruder that allows for continuous production is preferable. In melt-kneading with the extruder, one or a plurality of extruders may be used among a single-screw extruder, a multi-screw extruder such as a twin-screw extruder or a four-screw extruder, and a twin-screw single-screw combined extruder. In terms of the improved melt-kneading performance, the improved reactivity and the improved productivity, it is preferable to use a multi-screw extruder such as a twin-screw extruder or a four-screw extruder. The most preferable method is melt-kneading with a twin-screw extruder. The following describes an example that is a method of melt-kneading the polyamide resin (A) with the compound (B) that is produced in advance from the hydroxy group- and/or amino group-containing compound (b) and the compound (b'), using a two-screw extruder. The same applies to the case of melt-kneading the compound (b) with the polyamide resin (A).

In the case of melt-kneading with the twin-screw extruder, the method of supplying the raw materials to the twin-screw extruder is not specifically limited. The compound (B) is likely to accelerate decomposition of the polyamide resin in a temperature range higher than the melting point of the polyamide resin. A preferable method of supplying the compound (B) to the twin-screw extruder accordingly supplies the compound (B) from a downstream side of the supply position of the polyamide resin, so as to shorten the kneading time of the polyamide resin (A) with the compound (B). In the description hereof, the side where the raw materials are supplied to the twin-screw extruder is defined as upstream side, and the side where the molten resin is discharged is defined as downstream side.

When the resin composition used according to the embodiment of the invention includes the phosphorus-containing compound (C), the phosphorus-containing compound (C) is likely to accelerate condensation of the polyamide resin (A) during melt-kneading. It is accordingly preferable to supply the phosphorus-containing compound (C) along with the compound (B) from the downstream side of the supply position of the polyamide resin (A).

A ratio (L/D) of full screw length L to screw diameter D of the twin-screw extruder is preferably not less than 25 and is more preferably greater than 30. For example, in the case of the resin composition including the phosphorus-containing compound (C), the ratio L/D of not less than 25 enables the compound (B) to be readily supplied after the polyamide resin (A) is sufficiently kneaded with the phosphorus-containing compound (C). As a result, this further enhances the reactivity of the polyamide resin (A) with the compound (B) and accelerates formation of the shield layer during heat treatment. This accordingly enables the value Q-P and the value S-T to be readily adjusted in the desired ranges described above. As a result, this further improves the heat aging resistance and the calcium chloride resistance.

According to the embodiment of the invention, it is preferable to supply at least the polyamide resin (A) from the upstream side of 1/2 of the screw strength to the twin-screw extruder to be melt-kneaded. It is more preferable to supply at least the polyamide resin (A) from an upstream-side end of a screw segment. The screw length herein denotes the length from the upstream-side end of the screw segment at a position (feed port) on the screw base where the polyamide resin (A) is supplied to a leading end of the screw. The upstream-side end of the screw segment denotes the position of a screw piece located at a most upstream end of the screw segment coupled with the extruder.

It is preferable to supply the compound (B) and the phosphorus-containing compound (C) as needed from the downstream side of 1/2 of the screw length to the twin-screw extruder to be melt-kneaded. Supplying the compound (B) and the phosphorus-containing compound (C) as needed from the downstream side of 1/2 of the screw length enables the compound (B) to be readily supplied after the polyamide resin (A) is sufficiently kneaded. This increases the reaction rate of the compound (B), while suppressing an increase in the viscosity of the polyamide resin (A). This accordingly increases the branching degree and reduces the autoagglutination force. As a result, this further enhances the reactivity of the polyamide resin (A) with the compound (B) and accelerates formation of the shield layer during heat treatment. This accordingly enables the value Q-P and the value S-T to be readily adjusted in the desired ranges described above and further improves the heat aging resistance and the calcium chloride resistance.

In order to exert the advantageous effects of the embodiment of the invention more significantly, it is preferable to enhance the reactivity of the compound (B) with the polyamide resin (A). This accelerates formation of the shield layer during heat treatment and enables the value Q-P and the value S-T to be readily adjusted in the desired ranges described above. A procedure of enhancing the reactivity of the compound (B) with the polyamide resin (A) may be, for example, a method of forming a shield layer that has a dense network structure on the surface of a molded product by increasing the resin pressure in melt-kneading by selection of a kneading temperature and a screw arrangement or by preparing a high concentration premixture of the polyamide resin (A) and the compound (B) and subsequently melt-kneading the premixture with the polyamide resin (A).

When the polyamide resin composition is manufactured using the twin-screw extruder, in terms of the improved kneading performance and the enhanced reactivity, it is preferable to use a twin-screw extruder having a plurality of full

flight zones and a plurality of kneading zones. Each full flight zone is comprised of one or more full flights. Each kneading zone is comprised of one or more kneading disks.

Additionally, on the assumption that a maximum resin pressure among the resin pressures in the plurality of kneading zones is Pkmax (MPa) and that a minimum resin pressure among the resin pressures in the plurality of full flight zones is Pfmin (Mpa), the preferable condition of melt kneading is

$$\mathrm{Pkmax} \geq \mathrm{Pfmin} + 0.3,$$

and the more preferable condition of melt kneading is

$$\mathrm{Pkmax} \geq \mathrm{Pfmin} + 0.5.$$

The resin pressures in the kneading zone and in the full flight zone denote resin pressures measured by resin pressure gauges placed in the respective zones.

The kneading zone has the better kneading performance and the better reactivity of the molten resin, compared with the full flight zone. Filling the kneading zone with the molten resin significantly improves the kneading performance and the reactivity. One index indicating the filling degree of the molten resin is the value of resin pressure. The higher resin pressure is usable as one indication of the higher filling degree of the molten resin. In other words, in the case of using the twin-screw extruder, increasing the resin pressure in the kneading zone to be higher than the resin pressure in the full flight zone in a predetermined range effectively promotes the kneading performance and the reactivity. As a result, it is expected to enhance the compatibility and the dispersibility of the compound (B) with the polyamide resin (A) and thereby accelerate formation of a shield layer during heat treatment. As a result, this enables the value Q-P and the value S-T to be readily adjusted in the desired ranges described above. This accordingly further improves the heat aging resistance and the calcium chloride resistance.

The method of increasing the resin pressure in the kneading zone is not specifically limited. For example, a preferable procedure introduces a reverse screw zone serving to press back the molten resin to the upstream side, a seal ring zone serving to accumulate the molten resin, or the like between the kneading zones or on the downstream side of the kneading zone. The reverse screw zone or the seal ring zone is respectively comprised of one or more reverse screws or one or more seal rings. These may be introduced in combination.

It is generally known that the set cylinder temperature during melt kneading is equal to or higher than the melting point of the resin. An available procedure of increasing the resin pressure in the kneading zone may set the cylinder temperature in a first kneading zone or a first plasticization portion at the melting point or higher and set the cylinder temperature on the downstream side of the first kneading zone at the melting point or lower, so as to increase the viscosity of the molten resin and increase the resin pressure.

When the total length of the kneading zones located on the upstream side of the feeding position of the compound (B) is Ln1, a ratio Ln1/L is preferably not less than 0.02 and is more preferably not less than 0.03. The ratio Ln1/L is, on the other hand, preferably not greater than 0.40 and is more preferably not greater than 0.20. The ratio Ln1/L of not less than 0.02 enhances the reactivity of the polyamide resin (A), whereas the ratio Ln1/L of not greater than 0.40 moderately suppresses shear heating and suppresses thermal degradation of the resin. The melting temperature of the polyamide resin (A) is not specifically limited but is preferably not higher than 340°C, in order to suppress reduction of the molecular weight due to thermal degradation of the polyamide resin (A).

When the total length of the kneading zones located on the downstream side of the feeding position of the compound (B) is Ln2, a ratio Ln2/L is preferably 0.02 to 0.30. The ratio Ln2/L of not less than 0.02 further enhances the reactivity of the compound (B). The ratio Ln2/L is more preferably not less than 0.08. The ratio Ln2/L of not greater than 0.30, on the other hand, further suppresses decomposition of the polyamide resin (A). The ratio Ln2/L is more preferably not greater than 0.16.

A more preferable manufacturing method of the polyamide resin composition according to the embodiment of the invention may use the twin-screw extruder to prepare a high concentration premixture by melt-kneading the polyamide resin (A) with the compound (B) and to further melt-knead the high concentration premixture with the polyamide resin (A). It is preferable to prepare a high concentration premixture by melt-kneading 10 to 250 parts by weight of the compound (B) with 100 parts by weight of the polyamide resin (A) and to further melt-knead the high concentration premixture with the polyamide resin (A) by the twin-screw extruder. Compared with a procedure that does not prepare the high concentration premixture, this procedure further improves the heat aging resistance and the calcium chloride resistance of a resulting molded product. This cause is not elucidated but may be attributed to the following. Two melt-kneading operations are expected to further enhance the compatibility of the polyamide resin (A) with the compound (B) and to cause

the compound (B) to be more finely dispersed in the resin composition, thereby forming a shield layer having a denser network structure in a shorter time period.

Additionally, in the process of preparing the high concentration premixture, in order to suppress reduction of the melt stability, it is preferable to supply the compound (B) from the downstream side of the polyamide resin feeding position at the time of melt-kneading using the twin-screw extruder and thereby shorten the kneading time of the polyamide resin (A) with the compound (B).

The polyamide resin (A) used for preparation of the high concentration premixture may be identical or may be different. Nylon 6 or nylon 66 is preferably used as the polyamide resin (A) used for preparation of the high concentration premixture, in terms of the further improved heat aging resistance of a molded product.

The resin composition thus obtained may be molded by a known method to provide a molded product of the invention. The molded product may be, for example, in a sheet form, in a film form, in a fibrous form or the like. The molding technique employed may be, for example, injection molding, injection compression molding, extrusion molding, compression molding, blow molding, press molding or the like.

The molded product according to the embodiment of the invention may be used in practical applications after formation of the shield layer on the surface of the molded product by heat treatment. Previously forming the shield layer further improves the heat aging resistance and the calcium chloride resistance. The heat treatment temperature in this case is preferably not higher than a temperature that is lower than the melting point of the polyamide resin by 10°C and is also preferably not lower than 170°C. The heat treatment time is preferably not shorter than 12 hours and is also preferably not longer than 100 hours. The heat treatment is preferably performed under atmospheric pressure, and a heating device used may be, for example, a gear oven.

The molded product according to the embodiment of the invention may be used in various applications by taking advantage of its excellent properties, for example, automobile engine peripheral components, automobile under-hood components, automobile gear components, air intake and exhaust system components, and engine cooling water system components. Concrete examples of the application include automobile engine peripheral components such as engine cover, air intake pipe, timing belt cover, intake manifold, filler cap, throttle body, and cooling fan; automobile under-hood components such as cooling fan, top and base of radiator tank, cylinder head cover, oil pan, canister, brake piping, tube for fuel piping, and exhaust gas system components; automobile gear components such as gear, actuator, bearing retainer, bearing cage, chain guide and chain tensioner; air intake and exhaust system components such as air intake manifold, intercooler inlet, turbo charger, exhaust pipe cover, inner bush, bearing retainer, engine mount, engine head cover, resonator, and throttle body; and engine cooling water system components such as chain cover, thermostat housing, outlet pipe, radiator tank, alternator, and delivery pipe.

## Examples

The following describes the embodiment of the invention more specifically with reference to examples. The properties were evaluated by the following procedures.

[Melting point of polyamide]

About 5 mg of the polyamide resin was weighed, and the melting point of the polyamide resin (A) was measured in a nitrogen atmosphere under the following conditions using a robot DSC (differential scanning calorimeter) RDC 220 manufactured by Seiko Instruments Inc. The temperature of an observed endothermic peak (melting point) was determined when the polyamide resin was heated to a temperature higher than the melting point of the polyamide resin by 40°C to be the molten state, was subsequently cooled down to 30°C at a temperature decrease rate of 20°C/ minute, was kept at 30°C for 3 minutes and was then heated to the temperature higher than the melting point by 40°C at a temperature rise rate of 20°C/minute.

[Relative viscosity of polyamide resin]

The relative viscosity ($\eta r$) was measured in a 98% concentrated sulfuric acid solution having a polyamide resin concentration of 0.01 g/mol at 25°C using an Ostwald viscometer.

[Hydroxy value]

Respective 0.5 g aliquots of the compound (b) and the compound (B) were weighed in 250 ml Erlenmeyer flasks. Subsequently, 20.00 ml of a mixed solution of acetic anhydride and anhydrous pyridine adjusted to the ratio of 1: 10 (mass ratio) was obtained and added to the respective Erlenmeyer flasks. Each of the Erlenmeyer flasks equipped with a reflux condenser was refluxed with stirring in an oil bath controlled to temperature of 100°C for 20 minutes and

was then cooled down to room temperature. Subsequently 20 ml of acetone and 20 ml of distilled water were added to the Erlenmeyer flask through the condenser. The mixture was then titrated with a 0.5 ml/L ethanolic potassium hydroxide solution using a phenolphthalein indicator. The hydroxy value was calculated by subtracting the measurement result of a separately measured blank (without including the sample) according to Expression (5) given below:

$$\text{hydroxy value [mg KOH/g]} = [((B\text{-}C) \times f \times 28.05)/ S] + E \qquad (5)$$

B denotes the volume [ml] of the 0.5 mol/L potassium hydroxide ethanolic solution used for titration; C denotes the volume [ml] of the 0.5 mol/L ethanolic potassium hydroxide solution used for titration of the blank; f denotes the factor of the 0.5 mol/L ethanolic potassium hydroxide solution; S denotes the mass [g] of the sample, and E denotes the acid value.

[Amine value]

Respective 0.5 g to 1.5 g aliquots of the compound (b) and the compound (B) were precisely weighed and were respectively dissolved in 50 ml of ethanol. Using a potentiometric titrator equipped with a pH electrode (AT-200 manufactured by KYOTO ELECTRONIC MANUFACTURING CO., LTD.), the respective solutions were subjected to neutralization titration with a 0.1 mol/L ethanolic hydrochloric acid solution. The inflection point of the pH curve was specified as the titration end point, and the amine value was calculated by Expression (6) given below:

$$\text{amine value [mg KOH/g]} = (56.1 \times V \times 0.1 \times f)/ W \qquad (6)$$

W denotes the weighed amount [g] of the sample; V denotes the titration volume [ml] at the titration end point; and f denotes the factor of the 0.1 mol/L ethanolic hydrochloric acid solution.

[Reaction rate of compound (B)]

A 0.035 g aliquot of the compound (B) was dissolved in 0.7 ml of deuterated dimethyl sulfoxide, and $^{1}$H-NMR measurement was performed for the epoxy group and $^{13}$C-NMR measurement was performed for the carbodiimide group. The respective analysis conditions are given below:

(1) $^{1}$H-NMR

apparatus: nuclear magnetic resonance apparatus (JNM-AL400) manufactured by JEOL, Ltd;
solvent: deuterated dimethyl sulfoxide
observation frequencies: OBFRQ: 399.65 MHz, OBSET: 124.00 kHz, and OBFIN: 10500.00 Hz
cumulative number: 256 times

(2) $^{13}$C-NMR

apparatus: nuclear magnetic resonance apparatus (JNM-AL400) manufactured by JEOL, Ltd;
solvent: deuterated dimethyl sulfoxide
observation frequencies: OBFRQ: 100.40 MHz, OBSET: 125.00 kHz, and OBFIN: 10500.00 Hz
cumulative number: 512 times

The area of an epoxy ring-derived peak was determined from the obtained $^{1}$H-NMR spectrum, and the area of a carbodiimide group-derived peak was determined from the obtained $^{13}$C-NMR spectrum. The peak area was determined by integrating the area of a region surrounded by the base line and the peak using analysis software associated with the NMR apparatus. The reaction rate was calculated by Expression (4) given below, where g denotes a peak area of a dry-blended mixture of the compound (b) and the compound (b') used as the raw material; h denotes a peak area of the compound (B):

$$\text{Reaction rate (\%)} = \{1 - (h/g)\} \times 100 \qquad (4)$$

[Branching degree]

The branching degree was calculated by Expression (1) given below after $^{13}C$-NMR analysis of the compound (B) under the following conditions:

$$\text{branching degree} = (d+t)/ (d+t+l) \qquad (1)$$

In Expression (1), d denotes the number of dendric units; 1 denotes the number of linear units; and t denotes the number of terminal units. These numbers d, t and 1 were calculated from a peak area measured by $^{13}C$-NMR. The number d is derived from the tertiary or the quaternary carbon atom; the number t is derived from the methyl group among the primary carbon atoms; and the number l is derived from the primary or the secondary carbon atom other than those involved in the number t. The peak area was determined by integrating the area of a region surrounded by the base line and the peak using analysis software associated with the NMR apparatus. The measurement conditions are given below:

(1) $^{13}C$-NMR

apparatus: nuclear magnetic resonance apparatus (JNM-AL400) manufactured by JEOL, Ltd;
solvent: deuterated dimethyl sulfoxide
observation frequencies: OBFRQ: 100.40 MHz, OBSET: 125.00 kHz, and OBFIN: 10500.00 Hz
cumulative number: 512 times

[Weight-average molecular weight and number-average molecular weight]

A solution used for measurement was obtained by dissolving 2.5 mg of the compound (B) in 4 ml of hexafluoro-2-propanol (with addition of 0.005 N sodium trifluoroacetate) and filtering with a filter of 0.45 μm. The measurement conditions are given below:

apparatus: gel permeation chromatography (GPC) (manufactured by Waters Corporation)
detector: differential refractometer Waters 410 (manufactured by Waters Corporation)
column: Shodex HFIP-806M (two) + HFIP-LG (manufactured by Shimadzu GLC Ltd.)
flow rate: 0.5 ml/min
injected volume of sample: 0.1 ml
temperature: 30°C
calibration of molecular weight: poly(methyl methacrylate)

[Number of hydroxy group and amino group and number of epoxy group and carbodiimide group]

The number of hydroxy groups or the number of amino groups was calculated according to Expression (2) given below after calculation of the number-average molecular weight and the hydroxy value or the amine value of the compound (B) or the compound (b):

$$\text{number of hydroxy groups or number of amino groups} = (\text{number-average molecular weight} \times \text{hydroxy value or amine value})/ 56110 \quad (2)$$

The number of epoxy groups or the number of carbodiimide groups was calculated by dividing the number-average molecular weight of the compound (B) or the compound (b') by an epoxy equivalent or a carbodiimide equivalent.

The number-average molecular weight, the hydroxy value and the amine value were measured by the methods described above. The epoxy equivalent was calculated from a titration amount at the time of a color change of a solution from violet to bluish green according to Expression (7) given below by dissolving 400 mg of the compound (B) or 400 mg of the compound (b') in 30 ml of hexafluoro-2-propanol, adding 20 ml of acetic acid and a tetramethylammonium bromide/ acetic acid solution (= 50 g/ 200 ml), and performing titration using 0.1 N perchloric acid as a titrant and Crystal violet as an indicator:

$$\text{epoxy equivalent [g/eq]} = W/ ((F\text{-}G) \times 0.1 \times f \times 0.001) \quad (7)$$

F denotes the volume [ml] of 0.1 N perchloric acid used in the titration; G denotes the volume [ml] of 0.1 N perchloric acid used in titration of a blank; f denotes the factor of 0.1 N perchloric acid; and W denotes the mass [g] of a sample.

The carbodiimide equivalent was calculated by a method described below. 100 parts by weight of the compound (B) or the compound (b') were dry blended with 30 parts by weight of potassium ferrocyanide (manufactured by Tokyo Chemical Industry Co., Ltd.) as an internal standard substance, and a sheet was produced by hot pressing the dry-blended mixture at approximately 200°C for 1 minute. The infrared absorption spectrum of the sheet was subsequently measured by the transmission method with an infrared spectrophotometer (IR Prestige-21/AIM8800 manufactured by Shimadzu Corporation). The measurement conditions were the resolution of 4 $cm^{-1}$ and the cumulative number of 32 times. In the infrared absorption spectrum by the transmission method, the absorbance is inversely proportional to the thickness of the sheet. There is accordingly a need to standardize the peak intensity of the carbodiimide group using an internal standard peak. A value was calculated by dividing the absorbance of a carbodiimide group-derived peak appearing at about 2140 $cm^{-1}$ by the absorbance of an absorption peak of CN group of potassium ferrocyanide appearing at about 2100 $cm^{-1}$. The carbodiimide equivalent was calculated from this value by performing IR measurement using samples having known carbodiimide equivalents, preparing a calibration curve from a ratio of the absorbance of a carbodiimide group-derived peak to the absorbance of an internal standard peak and substituting an absorbance ratio of the compound (B) or the compound (b'). An aliphatic polycarbodiimide ("CARBODILITE" (registered trademark) LA-1 manufactured by Nisshinbo Chemical Inc., carbodiimide equivalent of 247 g/ mol) and an aromatic polycarbodiimide ("STABAXOL" (registered trademark) P manufactured by LANXESS K.K., carbodiimide equivalent of 360 g/ mol) were used as the samples having the known carbodiimide equivalents.

[Content of phosphorus atom relative to content of polyamide resin in polyamide resin composition]

An inorganic substance content of pellets obtained in each of examples and comparative examples was determined by drying the pellets under reduced pressure at 80°C for 12 hours and ashing the dried pellets in an electric oven at 550°C for 24 hours. An additive content was subsequently determined by stirring the pellets in DMSO at 60°C and extracting additive components other than the polyamide resin. The content of the polyamide resin in the composition was then calculated by subtracting the weight of the inorganic substance and the weight of the additives from the weight of the polyamide resin composition.

The pellets of the polyamide resin composition were subjected to wet decomposition in a sulfuric acid/ hydrogen peroxide solution system to convert phosphorus to orthophosphoric acid, and the decomposed solution wad diluted. Phosphomolybdic acid was then obtained by reaction of the orthophosphoric acid with a molybdate in a 1 mol/L sulfuric acid solution. The phosphorus content in the polyamide resin composition was calculated by reducing the obtained phosphomolybdic acid with hydrazine sulfate, measuring the absorbance of a generated heteropoly blue at 830 nm by an absorptiometer (calibration curve method), and performing colorimetric determination. The phosphorus atom content relative to the content of the polyamide resin was determined by dividing the phosphorus content calculated by colorimetric determination by the amount of the polyamide resin calculated in advance. The absorptiometer used was U-3000 manufactured by Hitachi, Ltd.

[Infrared absorption spectrum]

A cutting surface was obtained by cutting a rod-like test piece obtained in each of the examples and the comparative examples from the surface to the depth of 0.28 mm with a milling machine and subsequent mirror finishing with a diamond cutter. An infrared absorption spectrum of the obtained cutting surface was measured under the following conditions by infrared ATR spectroscopy with a Fourier transform infrared spectrophotometer (IR Prestige-21/AIM8800 manufactured by Shimadzu Corporation):

light source: special ceramics
detector: MCT
resolution: 4 $cm^{-1}$
cumulative number: 512 times
IRE: Diamond/ KRS-5

In the observed infrared absorption spectrum, a maximum value of absorbance A1680 at 1680 $cm^{-1} \pm 8$ $cm^{-1}$, a maximum value of absorbance A1632 at 1632 $cm^{-1} \pm 8$ $cm^{-1}$ and a maximum value of absorbance A1720 at 1720 $cm^{-1} \pm 8$ $cm^{-1}$ with an absorbance at 1800 $cm^{-1}$ as the standard baseline were respectively determined, and intensity ratios P (A1680/ A1632) and T (A1720/ A1632) were calculated.

A heat-treated cutting surface was obtained by heat treatment of the cutting surface in a gear oven SPH-101 manufactured by ESPEC CORP. at a temperature lower than the melting point of the polyamide resin by 35°C for 24

hours. An infrared absorption spectrum of the obtained heat-treated cutting surface was measured in the same manner as that for the cutting surface prior to the heat treatment.

In the observed infrared absorption spectrum, a maximum value of absorbance A'1680 at 1680 $cm^{-1} \pm 8$ $cm^{-1}$, a maximum value of absorbance A'1632 at 1632 $cm^{-1} \pm 8$ $cm^{-1}$, a maximum value of absorbance A'1700 at 1700 $cm^{-1} \pm 8$ $cm^{-1}$ and a maximum value of absorbance A'1720 at 1720 $cm^{-1} \pm 8$ $cm^{-1}$ with an absorbance at 1800 $cm^{-1}$ as the standard baseline were respectively determined, and intensity ratios Q (A'1680/A'1632), R (A'1700/ A'1632) and S (A'1720/A'1632) were calculated.

[Heat aging resistance]

Each of ASTM No. 1 dumbbell test pieces of 3.2 mm in thickness obtained in the respective examples and comparative examples was subjected to a tensile test using a tension tester Tensilon UTA2.5T (manufactured by ORIENTEC Co., LTD.) at a crosshead speed of 10 mm/minute in conformity with ASTM D638. The measurement was repeated three times, and an average value thereof was calculated as tensile strength before heat aging resistance treatment. Each ASTM No.1 dumbbell test piece was subsequently subjected to heat treatment in a gear oven at 135°C under atmospheric pressure for 5000 hours or in a gear oven at 190°C under atmospheric pressure for 3000 hours (heat aging resistance treatment). The heat-treated test piece was subjected to the similar tensile test, and an average value of three measurements was calculated as tensile strength after the heat aging resistance treatment. A ratio of the tensile strength after the heat aging resistance treatment to the tensile strength before the heat aging resistance treatment was calculated as a retention of tensile strength. The higher retention of tensile strength indicates the better heat aging resistance.

[Calcium chloride resistance]

After each of rectangular plates (film gate) of 80 mm × 80 mm × 3 mm in thickness obtained in the respective examples and comparative examples was subjected to humidity control treatment in a thermos-hygrostat bath controlled to 60°C and 95%RH for 24 hours, a series of operations given below was repeated:

(1) performing hygroscopic treatment in a thermos-hygrostat bath controlled to 85°C and 95%RH for 1 hour;
(2) applying a gauze impregnated with about 43% by weight of saturated calcium chloride aqueous solution on each rectangular plate and performing heat treatment at 100°C under atmospheric pressure for 3 hours; and
(3) removing the gauze, and observing the surface of the rectangular plate after leaving the rectangular plate at room temperature for 1 hour. The above series of operations (1) to (3) was specified as one cycle, and a cycle number until the occurrence of cracking was counted. The larger cycle number indicates the better calcium chloride resistance.

Each of the rectangular plates obtained in the respective examples and comparative examples was also subjected to heat treatment at 190°C in a gear oven under atmospheric pressure for 24 hours or for 500 hours. The above series of operations (1) to (3) was repeated for each rectangular plate, and the cycle number until the occurrence of cracking was counted. The larger cycle number indicates the better calcium chloride resistance.

[Hot water resistance]

Pellets obtained in each of Examples 31, 32, 34, 35, and 37 to 40 were dried under reduced pressure at 80°C for 12 hours. An ASTM No. 1 dumbbell test piece of 3.2 mm in thickness was produced by injection molding of each of the dried pellets using an injection molding machine (SG75H-MIV manufactured by Sumitomo Heavy Industries, Ltd) under the conditions of a cylinder temperature higher than the melting point of the polyamide resin (A) by 15°C and a mold temperature of 80°C. Each test piece was subjected to a tensile test using a tension tester Tensilon UTA2.5T (manufactured by ORIENTEC Co., LTD.) at a crosshead speed of 10 mm/minute in conformity with ASTM D638. The measurement was repeated three times, and an average value thereof was calculated as a tensile strength before hot water resistance test treatment. Each ASTM No. 1 dumbbell test piece was placed in a pressure-resistant autoclave, ion exchanged water was added such that the test piece was sufficiently soaked in the ion exchanged water. The pressure-resistant autoclave was then subjected to hot water resistance test treatment in a gear oven at 90°C for 6 hours, and the test piece after the treatment was dried under reduced pressure at 80°C for 12 hours. The dried test piece was subjected to the similar tensile test, and an average value of three measurements was calculated as a tensile strength after the hot water resistance test treatment. A ratio (percentage) of the tensile strength after the hot water resistance test treatment to the tensile strength before the hot water resistance test treatment was calculated as a retention of tensile strength. The higher retention of tensile strength indicates the better hot water resistance.

[Moist heat resistance]

Pellets obtained in each of Examples 3-5, 12, 13, 32, 33, 40 and 41 and Comparative Example 8 were dried under reduced pressure at 80°C for 12 hours. A rectangular plate (film gate) of 80 mm × 80 mm × 3 mm in thickness was produced by injection molding of each of the dried pellets using an injection molding machine (SG75H-MIV manufactured by Sumitomo Heavy Industries, Ltd) under the conditions of a cylinder temperature higher than the melting point of the polyamide resin (A) by 15°C, a mold temperature of 80°C, an injection/ cooling time of 10/10 seconds, a screw rotation speed of 150 rpm, an injection pressure of 100 MPa and an injection rate of 100 mm/ second. Each obtained rectangular plate was subjected to heat moisture treatment under the conditions of 80°C and 95% RH for 1 hour. The surface condition of the rectangular plate after the treatment was visually observed and was evaluated according to the following criteria:

A: The molded product was white in color and had no bleedout observed on the surface;
B: The molded product was slightly bluish white or slightly reddish brown in color and had no bleedout observed on the surface;
C1: The molded product was bluish white or reddish brown in color and had no bleedout observed on the surface; and
C2: The molded product was white in color and had bleedout observed on the surface.

The bleedout means floating on the surface of the molded product. When the hydroxy group- and/or amino group-containing compound (b), the compound (B) or the compound (b') is in the solid state at room temperature, the bleedout is in powdery form. When the hydroxy group- and/or amino group-containing compound (b), the compound (B) or the compound (b') is in the liquid state at room temperature, the bleedout is in viscous liquid form.

Reference Example 1 (B-1)

After 33.3 parts by weight of bisphenol A-type epoxy resin ("jER" (registered trademark) 1004 manufactured by Mitsubishi Chemical Corporation, number of epoxy groups = 2 in one molecule, molecular weight = 1650, molecular weight/ number of functional groups in one molecule = 825) was premixed with 100 parts by weight of dipentaerythritol (manufactured by Koei Chemical Company Limited), the mixture was melt-kneaded using a twin-screw extruder PCM30 manufactured by Ikegai Corp. under the conditions of the cylinder temperature of 200°C and the screw rotation speed of 100 rpm for 3.5 minutes and was pelletized with a hot cutter. The resulting pellets were supplied again to the extruder and was subjected to a re-melt-kneading process once to obtain pellets of a compound and/or its condensate expressed by General Formula (3). The obtained compound had the reaction rate of 56%, the branching degree of 0.34 and the hydroxy value of 1200 mg KOH/g. The number of hydroxy groups in one molecule was greater than the number of epoxy groups in one molecule, and the total number of OH group, $NH_2$ group and OR group in General Formula (3) was not less than 3.

Reference Example 2 (B-2)

After 33.3 parts by weight of bisphenol A-type epoxy resin ("jER" (registered trademark) 1007 manufactured by Mitsubishi Chemical Corporation, number of epoxy groups = 2 in one molecule, molecular weight = 2900, molecular weight/ number of functional groups in one molecule = 1450) was premixed with 100 parts by weight of dipentaerythritol (manufactured by Koei Chemical Company Limited), the mixture was melt-kneaded using the twin-screw extruder PCM30 manufactured by Ikegai Corp. under the conditions of the cylinder temperature of 200°C and the screw rotation speed of 100 rpm for 3.5 minutes and was pelletized with a hot cutter. The resulting pellets were supplied again to the extruder and was subjected to the re-melt-kneading process once to obtain pellets of a compound and/or its condensate expressed by General Formula (3). The obtained compound had the reaction rate of 52%, the branching degree of 0.32 and the hydroxy value of 1160 mg KOH/g. The number of hydroxy groups in one molecule was greater than the number of epoxy groups in one molecule, and the total number of OH group, $NH_2$ group and OR group in General Formula (3) was not less than 3.

Reference Example 3 (B-3)

After 33.3 parts by weight of bisphenol A-type epoxy resin ("jER" (registered trademark) 1010 manufactured by Mitsubishi Chemical Corporation, number of epoxy groups = 2 in one molecule, molecular weight = 5500, molecular weight/ number of functional groups in one molecule = 2750) was premixed with 100 parts by weight of dipentaerythritol (manufactured by Koei Chemical Company Limited), the mixture was melt-kneaded using the twin-screw extruder PCM30 manufactured by Ikegai Corp. under the conditions of the cylinder temperature of 200°C and the screw rotation speed

of 100 rpm for 3.5 minutes and was pelletized with a hot cutter. The resulting pellets were supplied again to the extruder and was subjected to the re-melt-kneading process once to obtain pellets of a compound and/or its condensate expressed by General Formula (3). The obtained compound had the reaction rate of 50%, the branching degree of 0.29 and the hydroxy value of 1100 mg KOH/g. The number of hydroxy groups in one molecule was greater than the number of epoxy groups in one molecule, and the total number of OH group, $NH_2$ group and OR group in General Formula (3) was not less than 3.

Reference Example 4 (B-4)

After 10 parts by weight of phenol novolac-type epoxy resin ("EPPN" (registered trademark) 201 manufactured by Nippon Kayaku Co., Ltd., number of epoxy groups = 7 in one molecule, molecular weight = 1330, molecular weight/ number of functional groups in one molecule = 190) was premixed with 100 parts by weight of dipentaerythritol (manufactured by Koei Chemical Company Limited), the mixture was melt-kneaded using the twin-screw extruder PCM30 manufactured by Ikegai Corp. under the conditions of the cylinder temperature of 200°C and the screw rotation speed of 100 rpm for 3.5 minutes and was pelletized with a hot cutter. The resulting pellets were supplied again to the extruder and was subjected to the re-melt-kneading process once to obtain pellets of a compound and/or its condensate expressed by General Formula (3). The obtained compound had the reaction rate of 53%, the branching degree of 0.29 and the hydroxy value of 1280 mg KOH/g. The number of hydroxy groups in one molecule was greater than the number of epoxy groups in one molecule, and the total number of OH group, $NH_2$ group and OR group in General Formula (3) was not less than 3.

Reference Example 5 (B-5)

After 13.3 parts by weight of bisphenol A-type epoxy resin ("jER" (registered trademark) 1004 manufactured by Mitsubishi Chemical Corporation, number of epoxy groups = 2 in one molecule, molecular weight = 1650, molecular weight/ number of functional groups in one molecule = 825) was premixed with 100 parts by weight of trimethylolpropane polyoxypropylenetriamine ("JEFFAMINE" (registered trademark) T403 manufactured by Huntsman Corporation, number of amino groups = 3 in one molecule, molecular weight = 440, amine value = 360 mg KOH/g), the mixture was melt-kneaded using the twin-screw extruder PCM30 manufactured by Ikegai Corp. under the conditions of the cylinder temperature of 200°C and the screw rotation speed of 100 rpm for 3.5 minutes and was pelletized with a hot cutter. The resulting pellets were supplied again to the extruder and was subjected to the re-melt-kneading process once to obtain pellets of a compound and/or its condensate expressed by General Formula (3). The obtained compound had the reaction rate of 56%, the branching degree of 0.34 and the hydroxy value of 1200 mg KOH/g. The number of hydroxy groups in one molecule was greater than the number of epoxy groups in one molecule, and the total number of OH group, $NH_2$ group and OR group in General Formula (3) was not less than 3.

Reference Example 6 (B-6)

After 33.3 parts by weight of bisphenol A diglycidyl ether (manufactured by Tokyo Chemical Industry Co., Ltd., number of epoxy groups = 2 in one molecule, molecular weight = 340, molecular weight/ number of functional groups in one molecule = 170) was premixed with 100 parts by weight of dipentaerythritol (manufactured by Koei Chemical Company Limited), the mixture was melt-kneaded using the twin-screw extruder PCM30 manufactured by Ikegai Corp. under the conditions of the cylinder temperature of 200°C and the screw rotation speed of 100 rpm for 3.5 minutes and was pelletized with a hot cutter. The resulting pellets were supplied again to the extruder and was subjected to the re-melt-kneading process once to obtain pellets of a compound and/or its condensate expressed by General Formula (3). The obtained compound had the reaction rate of 88%, the branching degree of 0.32 and the hydroxy value of 1290 mg KOH/g. The number of hydroxy groups in one molecule was greater than the number of epoxy groups in one molecule, and the total number of OH group, $NH_2$ group and OR group in General Formula (3) was not less than 3.

Reference Example 7 (E-1)

After 100 parts by weight of (b-2) dipentaerythritol (manufactured by Koei Chemical Company Limited) was premixed with 100 parts by weight of nylon 6 ("Amilan" (registered trademark) CM1010 manufactured by Toray Industries, Inc.), the mixture was melt-kneaded using a twin-screw extruder TEX30 (L/D= 45.5) manufactured by the Japan Steel Works, Ltd. under the conditions of the cylinder temperature of 240°C and the screw rotation speed of 150 rpm and was pelletized with a strand cutter. The resulting pellets were vacuum dried at 80°C for 8 hours, and high-concentration premixture pellets were obtained.

Reference Example 8 (E-2)

After 100 parts by weight of (B-1) compound was premixed with 100 parts by weight of nylon 6 ("Amilan" (registered trademark) CM1010 manufactured by Toray Industries, Inc.), the mixture was melt-kneaded using the twin-screw extruder TEX30 (L/D= 45.5) manufactured by the Japan Steel Works, Ltd. under the conditions of the cylinder temperature of 240°C and the screw rotation speed of 150 rpm and was pelletized with a strand cutter. The resulting pellets were vacuum dried at 80°C for 8 hours, and high-concentration premixture pellets were obtained.

Reference Example 9 (E-3)

After 26.7 parts by weight of (B-4) compound was premixed with 100 parts by weight of nylon 66 ("Amilan" (registered trademark) CM3001-N manufactured by Toray Industries, Inc.), the mixture was melt-kneaded using the twin-screw extruder TEX30 (L/D= 45.5) manufactured by the Japan Steel Works, Ltd. under the conditions of the cylinder temperature of 235°C and the screw rotation speed of 150 rpm and was pelletized with a strand cutter. The resulting pellets were vacuum dried at 80°C for 8 hours, and high-concentration premixture pellets were obtained.

Reference Example 10 (E-4)

After 33.3 parts by weight of (b-3) trimethylolpropane polyoxypropylenetriamine ("JEFFAMINE" (registered trademark) T403 manufactured by Huntsman Corporation) was premixed with 100 parts by weight of nylon 6 ("Amilan" (registered trademark) CM1010 manufactured by Toray Industries, Inc.), the mixture was melt-kneaded using the twin-screw extruder TEX30 (L/D= 45.5) manufactured by the Japan Steel Works, Ltd. under the conditions of the cylinder temperature of 245°C and the screw rotation speed of 150 rpm and was pelletized with a strand cutter. The resulting pellets were vacuum dried at 80°C for 8 hours, and high-concentration premixture pellets were obtained.

Reference Example 11 (E-5)

After 33.3 parts by weight of (B-5) compound was premixed with 100 parts by weight of nylon 6 ("Amilan" (registered trademark) CM1010 manufactured by Toray Industries, Inc.), the mixture was melt-kneaded using the twin-screw extruder TEX30 (L/D= 45.5) manufactured by the Japan Steel Works, Ltd. under the conditions of the cylinder temperature of 245°C and the screw rotation speed of 150 rpm and was pelletized with a strand cutter. The resulting pellets were vacuum dried at 80°C for 8 hours, and high-concentration premixture pellets were obtained.

Reference Example 12 (E-6)

After 100 parts by weight of (B-2) compound was premixed with 100 parts by weight of nylon 6 ("Amilan" (registered trademark) CM1010 manufactured by Toray Industries, Inc.), the mixture was melt-kneaded using the twin-screw extruder TEX30 (L/D= 45.5) manufactured by the Japan Steel Works, Ltd. under the conditions of the cylinder temperature of 245°C and the screw rotation speed of 150 rpm and was pelletized with a strand cutter. The resulting pellets were vacuum dried at 80°C for 8 hours, and high-concentration premixture pellets were obtained.

Reference Example 13 (F-1: nylon 66 master batch having a ratio CuI/KI (weight ratio) = 0.23

After 2.0 parts by weight of copper iodide and 21.7 parts by weight of a 40% by weight of potassium iodide aqueous solution were premixed with 100 parts by weight of nylon 66 ("Amilan" (registered trademark) CM3001-N manufactured by Toray Industries, Inc.), the mixture was melt-kneaded using the twin-screw extruder TEX30 (L/D= 45.5) manufactured by the Japan Steel Works, Ltd. under the conditions of the cylinder temperature of 275°C and the screw rotation speed of 150 rpm and was pelletized with a strand cutter. The resulting pellets were vacuum dried at 80°C for 8 hours, and master batch pellets having a copper content of 0.60% by weight were obtained.

These components are used in the examples and comparative examples as polyamide resin (A), compound (b), compound (b') and filler (D):

(A-1) nylon 6 resin having a melting point of 225°C, water content of 700 ppm, and $\eta r$ = 2.70;
(A-2) nylon 6 resin having a melting point of 225°C, water content of 200 ppm, and $\eta r$ = 2.70;
(A-3) nylon 66 resin having a melting point of 260°C, water content of 700 ppm, and $\eta r$ = 2.70;
(b-1) pentaerythritol (manufactured by Tokyo Chemical Industry Co., Ltd.), molecular weight of 136, hydroxy value of 1645 mg KOH/g, number of hydroxy groups = 4 in one molecule;
(b-2) dipentaerythritol (manufactured by Tokyo Chemical Industry Co., Ltd.), molecular weight of 254, hydroxy value

of 1325 mg KOH/g, number of hydroxy groups = 6 in one molecule;
(b-3) trimethylolpropane polyoxypropylenetriamine ("JEFFAMINE" (registered trademark) T403 manufactured by Huntsman Corporation), molecular weight of 440, amine value of 360 mg KOH/g, number of amino groups = 3 in one molecule;
(b'-1) phenol novolac-type epoxy resin ("EPPN" (registered trademark) 201 manufactured by Nippon Kayaku Co., Ltd.), molecular weight of 1330, average number of epoxy groups = 7 in one molecule, molecular weight/ number of functional groups in one molecule = 190;
(C-1) sodium hypophosphite monohydrate (manufactured by Wako Pure Chemical Industries, Ltd.), molecular weight of 105.99;
(C-2) tris(2,4-di-t-butylphenyl) phosphite ("irgafos" (registered trademark) 168 manufactured by BASF);
(D-1) glass fiber having circular cross section (T-275H manufactured by Nippon Electric Glass Co., Ltd.), diameter of cross section: 10.5 μm, surface treatment agent: silane coupling agent, sizing agent: carboxylic acid-based, fiber length: 3 mm;
(D-2) glass fiber having circular cross section (T-717H manufactured by Nippon Electric Glass Co., Ltd.), diameter of cross section: 10.5 μm, surface treatment agent: silane coupling agent, sizing agent: epoxy-based, fiber length: 3 mm; and
(G-1) hindered phenolic heat stabilizer "irganox" (registered trademark) 1010 manufactured by BASF, (tetrakis[methylene-3-(3',5'-di-t-butyl-4'-hydroxyphenyl)propionate] methane)

In the following, Examples 2, 16-24, 26, 27, 29 and 36 do not illustrate claim 1.

(Examples 1 - 9, 12 - 14, and 16 - 18 and Comparative Examples 1 - 8)

The polyamide resin (A) shown in respective tables was supplied from a main feeder of a twin-screw extruder TEX30 (L/D= 45) manufactured by the Japan Steel Works, Ltd. and set at the cylinder temperature equal to a temperature higher than the melting point of the polyamide resin by 15°C and the screw rotation speed of 200 rpm to the twin-screw extruder to be melt-kneaded. This main feeder was connected at a position of 0 viewed from the upstream side relative to the full length of the screw = 1.0, i.e., at a position of an upstream side end of the screw segment. Subsequently the compound (b) and/or compound (B), the phosphorus-containing compound (C) and the other (G) shown in the respective tables were supplied from a side feeder to the twin-screw extruder to be melt-kneaded. This side feeder was connected at a position of 0.65 viewed from the upstream side relative to the full length of the screw = 1.0, i.e., at a position on the downstream side of 1/2 of the screw length. The screw configuration of the twin-screw extruder was set such that Ln1/L = 0.14 and Ln2/L = 0.07, where Ln1 denotes the total length of kneading zones located on the upstream side of the feeding position of the compound (b) and/or the compound (B) and the like and Ln2 denotes the total length of kneading zones located on the downstream side of the feeding position of the compound (B) and the like (screw arrangement I). The strings ejected from the die were promptly cooled down in a water bath and were pelletized with a strand cutter.

The obtained pellets were vacuum dried at 80°C for 24 hours and were injection molded using an injection molding machine (SG75H-MIV manufactured by Sumitomo Heavy Industries, Ltd) under the conditions of a cylinder temperature higher than the melting point of the polyamide resin (A) by 15°C and a mold temperature of 80°C, and respective test pieces, i.e., a rod-like test piece of 6.4 mm in thickness, an ASTM No. 1 dumbbell test piece of 3.2 mm in thickness and a rectangular plate (film gate) of 80 mm × 80 mm × 3 mm in thickness (molded products) were obtained. Each of the obtained molded products was evaluated by the measurement and analysis procedures described above. The evaluation results of the respective examples are shown in the tables. The evaluation results of the moist heat resistance were: Example 3: C2, Example 4: A, Example 5: A, Example 12: C2, Example 13: A and Comparative Example 8: C2.

(Examples 10, 11, 15, 19, 24, 25, and 27 - 30, and Comparative Example 9)

The polyamide resin (A) and the high-concentration premixture (E) shown in respective tables were dry-blended and were supplied from a main feeder of a twin-screw extruder TEX30 (L/D= 45) manufactured by the Japan Steel Works, Ltd. and set at the cylinder temperature equal to a temperature higher than the melting point of the polyamide resin by 15°C and the screw rotation speed of 200 rpm to the twin-screw extruder to be melt-kneaded. This main feeder was connected at the position of 0 viewed from the upstream side relative to the full length of the screw = 1.0, i.e., at the position of the upstream side end of the screw segment. Subsequently the compound (b) and/or compound (B), the phosphorus-containing compound (C) and the high-concentration premixture (E) shown in the respective tables were supplied from a side feeder to the twin-screw extruder to be melt-kneaded. The positions of the main feeder and the side feeder and the screw configuration of the twin-screw extruder are identical with those of Example 1. The strings ejected from the die were promptly cooled down in a water bath and were pelletized with a strand cutter. The obtained

pellets were vacuum dried at 80°C for 24 hours and were molded.

The obtained pellets were injection molded by the same procedure as that of Example 1, and respective test pieces (molded products) were obtained. Each of the obtained molded products was evaluated by the measurement and analysis procedures described above.

(Examples 20 - 22)

The polyamide resin (A) shown in a table was supplied from a main feeder of a twin-screw extruder TEX30 (L/D= 45) manufactured by the Japan Steel Works, Ltd. and set at the cylinder temperature equal to a temperature higher than the melting point of the polyamide resin by 15°C and the screw rotation speed of 200 rpm to the twin-screw extruder to be melt-kneaded. This main feeder was connected at the position of 0 viewed from the upstream side relative to the full length of the screw = 1.0, i.e., at the position of the upstream side end of the screw segment. Subsequently the compound (b) and/or compound (B) shown in the table were supplied from a side feeder to the twin-screw extruder to be melt-kneaded. This side feeder was connected at the position of 0.65 viewed from the upstream side relative to the full length of the screw = 1.0, i.e., at the position on the downstream side of 1/2 of the screw length. The screw configuration of the twin-screw extruder was set such that Ln1/L = 0.14 and Ln2/L = 0.14, where Ln1 denotes the total length of kneading zones located on the upstream side of the feeding position of the compound (b) and/or the compound (B) and the like and Ln2 denotes the total length of kneading zones located on the downstream side of the feeding position of the compound (B) and the like (screw arrangement II). The strings ejected from the die were promptly cooled down in a water bath and were pelletized with a strand cutter.

The obtained pellets were vacuum dried at 80°C for 24 hours and were injection molded by the same procedure as that of Example 1, and respective test pieces (molded products) were obtained. Each of the obtained molded products was evaluated by the measurement and analysis procedures described above.

(Examples 23 and 26)

Pellets and respective test pieces (molded products) were obtained by a similar procedure to that of Examples 20 to 22 described above, except that the polyamide resin (A) and the high-concentration premixture (E) shown in respective tables were dry-blended and were supplied from a main feeder of a twin-screw extruder TEX30 (L/D= 45) manufactured by the Japan Steel Works, Ltd. and set at the cylinder temperature equal to a temperature higher than the melting point of the polyamide resin by 15°C and the screw rotation speed of 200 rpm to the twin-screw extruder. Each of the obtained molded products was evaluated by the measurement and analysis procedures described above.

(Examples 31 - 35 and Comparative Example 11)

Pellets and respective test pieces (molded products) were obtained by a similar procedure to that of Example 1 described above, except that the filler (D) shown in respective tables was supplied from a side feeder to the twin-screw extruder. Each of the obtained molded products was evaluated by the measurement and analysis procedures described above. The evaluation results of the respective examples are shown in the tables. The retention of tensile strength before and after the hot water resistance test treatment were: Example 31: 81%, Example 32: 95%, Example 34: 69%, and Example 35: 81%. The evaluation results of the moist heat resistance were: Example 32: C2 and Example 33: A.

(Examples 36 - 41 and Comparative Example 12)

Pellets and respective test pieces (molded products) were obtained by a similar procedure to that of Examples 31 to 35 described above, except that the polyamide resin (A) and the high-concentration premixture (E) shown in respective tables were dry-blended and were supplied from a main feeder to the twin-screw extruder. Each of the obtained molded products was evaluated by the measurement and analysis procedures described above. The evaluation results of the respective examples are shown in the tables. The retention of tensile strength before and after the hot water resistance test treatment were: Example 37: 82%, Example 38: 91%, Example 39: 89% and Example 40: 103%. The evaluation results of the moist heat resistance were: Example 40: C2 and Example 41: A.

(Comparative Example 10)

Pellets and respective test pieces (molded products) were obtained by a similar procedure to that of Example 34 described above, except that the polyamide resin (A) and the copper master batch (F) shown in a table were supplied from a main feeder to the twin-screw extruder. Each of the obtained molded products was evaluated by the measurement and analysis procedures described above.

The evaluation results of the respective examples and comparative examples are shown in Tables 1 to 8.

Examples 2, 16-24, 26, 27, 29 and 36 are included for information only; they do not illustrate the invention of claim 1.

[Table 1]

[Table 1]

| | | | EX 1 | EX 2 | EX 3 | EX 4 | EX 5 | EX 6 | EX 7 | EX 8 |
|---|---|---|---|---|---|---|---|---|---|---|
| (A) Polyamide resin | (A-1) Nylon 6 | parts by weight | 100 | 100 | 100 | 100 | 100 | 100 | 100 | 100 |
| | (A-3) Nylon 66 | parts by weight | - | - | - | - | - | - | - | - |
| (B)Compound | (B-1) Reference Ex 1 | parts by weight | 2.0 | 4.0 | 4.0 | - | - | 4.0 | 8.0 | - |
| | (B-2) Reference Ex 2 | parts by weight | - | - | - | 4.0 | - | - | - | - |
| | (B-3) Reference Ex 3 | parts by weight | - | - | - | - | 4.0 | - | - | - |
| (b) Compound | (b-2) | parts by weight | - | - | - | - | - | - | - | 4.0 |
| | (b-3) | parts by weight | - | - | - | - | - | - | - | - |
| (C) Phosphorus-containing compound | (C-1) | parts by weight | 0.4 | 0.1 | 0.4 | 0.4 | 0.4 | 1.0 | 0.4 | 0.4 |
| (E)High concentration premixture | (E-2) Reference Ex 8 | parts by weight | - | - | - | - | - | - | - | - |
| | (E-6) Reference Ex 12 | parts by weight | - | - | - | - | - | - | - | - |
| Phosphorus atom content relative to content of polyamide resin | | ppm | 1169 | 292 | 1169 | 1169 | 1169 | 2922 | 1169 | 1169 |
| Melt-kneading condition | Screw arrangement I or II | - | I | I | I | I | I | I | I | I |
| IR absorption spectrum of molded product prior to heat treatment | Intensity ratio P (A1680/A1632) | - | 0.060 | 0.055 | 0.053 | 0.053 | 0.053 | 0.053 | 0.052 | 0.058 |
| | Intensity ratio T (A1720/A1632) | - | 0.014 | 0.011 | 0.011 | 0.011 | 0.011 | 0.011 | 0.010 | 0.012 |
| IR spectrum of molded product after heat treatment at 190°C for 24 hours | Intensity ratio Q (A' 1680/A' 1632) | - | 0.117 | 0.101 | 0.095 | 0.097 | 0.098 | 0.094 | 0.091 | 0.112 |
| | Intensity ratio R(A' 1700/A' 1632) | - | 0.087 | 0.076 | 0.073 | 0.074 | 0.074 | 0.071 | 0.058 | 0.084 |
| | Intensity ratio S(A' 1720/A' 1632) | - | 0.097 | 0.084 | 0.080 | 0.078 | 0.077 | 0.079 | 0.068 | 0.091 |

(continued)

| | | | EX 1 | EX 2 | EX 3 | EX 4 | EX 5 | EX 6 | EX 7 | EX 8 |
|---|---|---|---|---|---|---|---|---|---|---|
| Difference in IR absorption spectrum before and after heat treatment | Difference in intensity ratio (Q-P) before and after heat treatment | - | 0.057 | 0.046 | 0.042 | 0.044 | 0.045 | 0.041 | 0.039 | 0.054 |
| | (S-R) | - | 0.010 | 0.008 | 0.007 | 0.004 | 0.003 | 0.008 | 0.010 | 0.007 |
| | Difference in intensity ratio (S-T) before and after heat treatment | - | 0.083 | 0.073 | 0.069 | 0.067 | 0.066 | 0.068 | 0.058 | 0.079 |
| Heat aging resistance | Retention of tensile strength after treatment at 135°C × 5000 hr | % | 72 | 87 | 91 | 89 | 88 | 94 | 97 | 78 |
| | Retention of tensile strength after treatment at 190°C × 3000 hr | % | 66 | 82 | 87 | 85 | 84 | 90 | 93 | 74 |
| Calcium chloride resistance | Untreated molded product (cycle number) | - | 33 | 35 | 38 | 38 | 37 | 40 | 45 | 35 |
| | Heat-treated product at 190°C × 24 hours (cycle number) | - | 73 | 80 | 85 | 83 | 82 | 87 | 89 | 76 |
| | Heat-treated product at 190°C × 500 hours (cycle number) | - | 75 | 82 | 87 | 85 | 84 | 90 | 92 | 78 |

[Table 2]

[Table 2]

| | | | EX 9 | EX 10 | EX 11 | EX 12 | EX 13 | EX 14 | EX 15 |
|---|---|---|---|---|---|---|---|---|---|
| (A) Polyamide resin | (A-1) Nylon 6 | parts by weight | 100 | 96.0 | 96.0 | - | - | - | - |
| | (A-3) Nylon 66 | parts by weight | - | - | - | 100 | 100 | 100 | 96.0 |
| (B) Compound | (B-1) Reference Ex 1 | parts by weight | - | - | - | 4.0 | - | - | - |
| | (B-2) Reference Ex 2 | parts by weight | - | - | - | - | 4.0 | - | - |
| | (B-3) Reference Ex 3 | parts by weight | - | - | - | - | - | - | - |
| (b) Compound | (b-2) | parts by weight | - | - | - | - | - | 4.0 | - |
| | (b-3) | parts by weight | 4.0 | - | - | - | - | - | - |
| (C) Phosphorus-containing compound | (C-1) | parts by weight | 0.4 | 0.4 | 0.4 | 0.4 | 0.4 | 0.4 | 0.4 |
| (E) High concentration premixture | (E-2) Reference Ex 8 | parts by weight | - | 8.0 | - | - | - | - | 8.0 |
| | (E-6) Reference Ex 12 | parts by weight | - | - | 8.0 | - | - | - | - |
| Phosphorus atom content relative to content of polyamide resin | | ppm | 1169 | 1169 | 1169 | 1169 | 1169 | 1169 | 1169 |
| Melt-kneading condition | Screw arrangement I or II | - | I | I | I | I | I | I | I |
| 1R absorption spectrum of molded product prior to heat treatment | Intensity ratio P(A 1680/A1632) | - | 0.058 | 0.052 | 0.052 | 0.053 | 0.053 | 0.058 | 0.052 |
| | Intensity ratio T (A1720/A1632) | - | 0.013 | 0.010 | 0.010 | 0.011 | 0.011 | 0.012 | 0.010 |

(continued)

| | | | EX 9 | EX 10 | EX 11 | EX 12 | EX 13 | EX 14 | EX 15 |
|---|---|---|---|---|---|---|---|---|---|
| IR spectrum of molded product after heat treatment at 190°C for 24 hours | Intensity ratio Q (A' 1680/A' 1632) | - | 0.113 | 0.085 | 0.086 | 0.099 | 0.101 | 0.112 | 0.086 |
| | Intensity ratio R(A' 1700/A' 1632) | - | 0.095 | 0.069 | 0.070 | 0.072 | 0.072 | 0.083 | 0.069 |
| | Intensity ratio S(A' 1720/A' 1632) | - | 0.085 | 0.075 | 0.074 | 0.076 | 0.075 | 0.091 | 0.075 |
| Difference in IR absorption spectrum before and after heat treatment | Difference in intensity ratio (Q-P) before and after heat treatment | - | 0.055 | 0.033 | 0.034 | 0.048 | 0.048 | 0.054 | 0.034 |
| | (S-R) | - | -0.010 | 0.006 | 0.004 | 0.004 | 0.003 | 0.008 | 0.006 |
| | Difference in intensity ratio (S-T) before and after heat treatment | - | 0.072 | 0.065 | 0.064 | 0.065 | 0.064 | 0.079 | 0.065 |
| Heat aging resistance | Retention of tensile strength after treatment at 135°C × 5000 hr | % | 72 | 110 | 108 | 89 | 87 | 80 | 108 |
| | Retention of tensile strength after treatment at 190°C × 3000 hr | % | 69 | 108 | 106 | 85 | 84 | 74 | 106 |
| Calcium chloride resistance | Untreated molded product (cycle number) | - | 37 | 51 | 49 | 50 | 50 | 45 | 60 |
| | Heat-treated product at 190°C × 24 hours (cycle number) | - | 74 | 94 | 92 | 95 | 93 | 90 | 101 |
| | Heat-treated product at 190°C × 500 hours (cycle number) | - | 76 | 97 | 95 | 97 | 94 | 92 | 105 |

[Table 3]

[Table 3]

| | | | EX 16 | EX 17 | EX 18 | EX 19 | EX 20 | EX 21 | EX 22 | EX 23 |
|---|---|---|---|---|---|---|---|---|---|---|
| (A) Polyamide resin | (A-1) Nylon 6 | parts by weight | - | - | - | - | 100 | 100 | 100 | 96.0 |
| | (A-2) Nylon 6 | parts by weight | 100 | 100 | 100 | 96.0 | - | - | - | - |
| (B) Compound | (B-1) Reference Ex 1 | parts by weight | 4.0 | - | - | - | 4.0 | - | - | - |
| (b) Compound | (b-2) | parts by weight | - | 4.0 | - | - | - | 4.0 | - | - |
| | (b-3) | parts by weight | - | - | 4.0 | - | - | - | 4.0' | - |
| (C) Phosphorus-containing compound | (C-1) | parts by weight | - | - | - | - | - | - | - | - |
| (E) High concentration premixture | (E-1) Reference Ex 7 | parts by weight | - | - | - | - | - | - | - | - |
| | (E-2) Reference Ex 8 | parts by weight | - | - | - | 8.0 | - | - | - | 8.0 |
| | (E-4) Reference Ex 10 | ports by weight | - | - | - | - | - | - | - | - |
| | (E-5) Reference Ex 11 | parts by weight | - | - | - | - | - | - | - | - |
| Phosphorus atom content relative to content of polyamide resin | | ppm | 0 | 0 | 0 | 0 | 0 | 0 | 0 | 0 |
| Melt-kneading condition | Screw arrangement I or II | - | I | I | I | I | II | II | II | II |
| IR absorption spectrum of molded product prior to heat treatment | Intensity ratio P(A1680/A1632) | - | 0.056 | 0.059 | 0.059 | 0.052 | 0.056 | 0.059 | 0.059 | 0.052 |
| | Intensity ratio T (A1 720/A1632) | - | 0.011 | 0.014 | 0.014 | 0.010 | 0.011 | 0.014 | 0.014 | 0.010 |
| IR spectrum of molded product after heat treatment at 190°C for 24 hours | Intensity ratio Q (A' 1680/A' 1632) | - | 0.105 | 0.117 | 0.115 | 0.089 | 0.104 | 0.116 | 0.117 | 0.088 |
| | Intensity ratio R(A' 1700/A' 1632) | - | 0.080 | 0.091 | 0.107 | 0.070 | 0.079 | 0.090 | 0.104 | 0.070 |
| | Intensity ratio S(A' 1720/A' 1632) | - | 0.087 | 0.096 | 0.092 | 0.077 | 0.086 | 0.095 | 0.091 | 0.077 |

(continued)

| | | | EX 16 | EX 17 | EX 18 | EX 19 | EX 20 | EX 21 | EX 22 | EX 23 |
|---|---|---|---|---|---|---|---|---|---|---|
| Difference in IR absorption spectrum before and after heat treatment | Difference in intensity ratio (Q-P) before and after heat treatment | - | 0.049 | 0.058 | 0.057 | 0.037 | 0.048 | 0.057 | 0.058 | 0.036 |
| | (S-R) | - | 0.007 | 0.005 | -0.015 | 0.007 | 0.007 | 0.005 | -0.013 | 0.007 |
| | Difference in intensity ratio (S-T) before and after heat treatment | - | 0.076 | 0.082 | 0.078 | 0.067 | 0.075 | 0.081 | 0.077 | 0.067 |
| Heat aging resistance | Retention of tensile strength after treatment at 135°C × 5000 hr | % | 78 | 70 | 68 | 102 | 80 | 73 | 67 | 100 |
| | Retention of tensile strength after treatment at 190°C × 3000 hr | % | 75 | 65 | 65 | 100 | 77 | 66 | 65 | 98 |
| Calcium chloride resistance | Untreated molded product (cycle number) | - | 35 | 32 | 30 | 47 | 37 | 35 | 35 | 53 |
| | Heat-treated product at 190°C × 24 hours (cycle number) | - | 79 | 70 | 71 | 89 | 81 | 72 | 73 | 92 |
| | Heat-treated product at 190°C × 500 hours (cycle number) | - | 81 | 72 | 73 | 92 | 83 | 74 | 75 | 95 |

[Table 4]

[Table 4]

| | | | EX 24 | EX 25 | EX 26 | EX 27 | EX 28 | EX 29 | EX 30 |
|---|---|---|---|---|---|---|---|---|---|
| (A)Polyamide resin | (A-1) Nylon 6 | parts by weight | 96.0 | 96.0 | 96.0 | 88.0 | 88.0 | 88.0 | 88.0 |
| | (A-2) Nylon 6 | parts by weight | - | - | - | - | - | - | - |
| (B)Compound | (B-1) Reference Ex 1 | parts by weight | - | - | - | - | - | - | - |
| (b)Compound | (b-2) | parts by weight | - | - | - | - | - | - | - |
| | (b-3) | parts by weight | - | - | - | - | - | - | - |
| (C)Phosphorus-containing compound | (C-1) | parts by weight | - | 0.4 | - | - | 0.4 | - | 0.4 |
| (E) High concentration premixture | (E-1) Reference Ex 7 | parts by weight | 8.0 | 8.0 | 8.0 | - | - | - | - |
| | (E-2) Reference Ex 8 | parts by weight | - | - | - | - | - | - | - |
| | (E-4) Reference Ex 10 | parts by weight | - | - | - | 16.0 | 16.0 | - | - |
| | (E-5) Reference Ex 11 | parts by weight | - | - | - | - | - | 16.0 | 16.0 |
| Phosphorus atom content relative to content of polyamide resin | | ppm | 0 | 1169 | 0 | 0 | 1169 | 0 | 1189 |
| Melt-kneading condition | Screw **arrangement** I or II | - | I | I | II | I | I | I | I |
| IR absorption spectrum of molded product prior to heat treatment | Intensity ratio P (A1680/A1632) | - | 0.058 | 0.055 | 0.056 | 0.058 | 0.057 | 0.054 | 0.053 |
| | Intensity ratio T (A1720/A1832) | - | 0.011 | 0.011 | 0.010 | 0.012 | 0.011 | 0.012 | 0.011 |

(continued)

| | | | EX 24 | EX 25 | EX 26 | EX 27 | EX 28 | EX 29 | EX 30 |
|---|---|---|---|---|---|---|---|---|---|
| IR spectrum of molded product after heat treatment at 190°C for 24 hours | Intensity ratio Q (A' 1680/A' 1632) | - | 0.111 | 0.102 | 0.105 | 0.113 | 0.107 | 0.098 | 0.095 |
| | Intensity ratio R(A' 1700/A' 1632) | - | 0.082 | 0.080 | 0.079 | 0.095 | 0.091 | 0.085 | 0.080 |
| | Intensity ratio S (A'1720/A'1632) | - | 0.089 | 0.085 | 0.086 | 0.088 | 0.084 | 0.079 | 0.075 |
| Difference in IR absorption spectrum before and after heat treatment | Difference in intensity ratio (Q-P) before and after heat treatment | - | 0.053 | 0.047 | 0.049 | 0.055 | 0.050 | 0.044 | 0.042 |
| | (S-R) | - | 0.007 | 0.005 | 0.007 | -0.007 | -0.007 | -0.006 | -0.005 |
| | Difference in Intensity ratio (S-T) before and after heat treatment | - | 0.078 | 0.074 | 0.076 | 0.076 | 0.073 | 0.067 | 0.064 |
| Heat aging resistance | Retention of tensile strength after treatment at 135°C × 5000 hr | % | 76 | 85 | 80 | 73 | 76 | 89 | 91 |
| | Retention of tensile strength after treatment at 190°C × 3000 hr | % | 71 | 79 | 75 | 69 | 74 | 84 | 87 |
| Calcium chloride resistance | Untreated molded product (cycle number) | - | 37 | 42 | 39 | 34 | 38 | 35 | 39 |
| | Heat-treated product at 190°C × 24 hours (cycle number) | - | 84 | 88 | 86 | 73 | 78 | 83 | 85 |
| | Heat-treated product at 190°C × 500 hours (cycle number) | - | 86 | 90 | 88 | 74 | 80 | 85 | 87 |

[Table 5]

[Table 5]

| | | | EX 31 | EX 32 | EX 33 | EX 34 | EX 35 | EX 36 |
|---|---|---|---|---|---|---|---|---|
| (A) Polyamide resin | (A-1) Nylon 6 | parts by weight | 100 | 100 | 100 | 100 | 100 | 96.0 |

(continued)

| | | | EX 31 | EX 32 | EX 33 | EX 34 | EX 35 | EX 36 |
|---|---|---|---|---|---|---|---|---|
| (B) Compound | (B-1) Reference Ex 1 | parts by weight | 4.0 | 4.0 | - | - | - | - |
| | (B-2) Reference Ex 2 | parts by weight | - | - | 4.0 | - | - | - |
| (b) Compound | (b-2) | parts by weight | - | - | - | 4.0 | 4.0 | - |
| (C) Phosphorus-containing compound | (C-1) | parts by weight | 0.4 | 0.4 | 0.4 | 0.4 | 0.4 | - |
| (D) Filler | (D-1) Glass fiber | parts by weight | 44.9 | - | - | 44.9 | - | 44.9 |
| | (D-2) Glass fiber | parts by weight | - | 44.9 | 44.9 | - | 44.9 | - |
| (E) High concentration premixture | (E-1) Reference Ex 7 | parts by weight | - | - | - | - | - | 8.0 |
| | (E-2) Reference Ex 8 | parts by weight | - | - | - | - | - | - |
| | (E-6) Reference Ex 12 | parts by weight | - | - | - | - | - | - |
| Phosphorus atom content relative to content of polyamide resin | | ppm | 1169 | 1169 | 1169 | 1169 | 1169 | 0 |
| Melt-kneading condition | Screw arrangement I or II | - | I | I | I | I | I | I |
| IR absorption spectrum of molded product prior to heat treatment | Intensity ratio P (A1680/A1632) | - | 0.053 | 0.053 | 0.053 | 0.057 | 0.057 | 0.058 |
| | Intensity ratio T (A1720/A1832) | - | 0.010 , | 0.010 | 0.010 | 0.013 | 0.013 | 0.011 |
| IR spectrum of molded product after heat treatment at 190°C for 24 hours | Intensity ratio Q (A' 1680/A' 1632) | - | 0.095 | 0.094 | 0.096 | 0.108 | 0.106 | 0.111 |
| | Intensity ratio R(A' 1700/A' 1632) | - | 0.071 | 0.070 | 0.072 | 0.083 | 0.082 | 0.085 |
| | Intensity ratio S (A'1720/A'1632) | - | 0.079 | 0.078 | 0.076 | 0.090 | 0.089 | 0.089 |

(continued)

| | | | EX 31 | EX 32 | EX 33 | EX 34 | EX 35 | EX 36 |
|---|---|---|---|---|---|---|---|---|
| Difference in IR absorption spectrum before and after heat treatment | Difference in intensity ratio (Q-P) before and after heat treatment | - | 0.042 | 0.041 | 0.043 | 0.051 | 0.049 | 0.053 |
| | (S-R) | - | 0.008 | 0.008 | 0.004 | 0.007 | 0.007 | 0.004 |
| | Difference in intensity ratio (S-T) before and after heat treatment | - | 0.069 | 0.068 | 0.066 | 0.077 | 0.076 | 0.078 |
| Heat aging resistance | Retention of tensile strength after treatment at 135°C × 5000 hr | % | 92 | 95 | 93 | 76 | 80 | 76 |
| | Retention of tensile strength after treatment at 190°C × 3000 hr | % | 88 | 91 | 87 | 73 | 77 | 71 |
| Calcium chloride resistance | Untreated molded product (cycle number) | - | 40 | 42 | 42 | 38 | 40 | 40 |
| | Heat-treated product at 190°C × 24 hours (cycle number) | - | 88 | 92 | 87 | 79 | 83 | 80 |
| | Heat-treated product at 190°C × 500 hours (cycle number) | - | 90 | 94 | 88 | 81 | 85 | 82 |

[Table 6]

[Table 6]

| | | | EX 37 | EX 38 | EX 39 | EX 40 | EX 41 |
|---|---|---|---|---|---|---|---|
| (A) Polyamide resin | (A-1) Nylon 6 | parts by weight | 96.0 | 96.0 | 96.0 | 96.0 | 96.0 |
| (B) Compound | (B-1) Reference Ex 1 | parts by weight | - | - | - | - | - |
| | (B-2) Reference Ex 2 | parts by weight | - | - | - | - | - |
| (b) Compound | (b-2) | parts by weight | - | - | - | - | - |
| (C) Phosphorus-containing compound | (C-1) | parts by weight | 0.4 | 0.4 | 0.4 | 0.4 | 0.4 |
| (D) Filler | (D-1) Glass fiber | parts by weight | 44.9 | - | 44.9 | - | - |
| | (D-2) Glass fiber | parts by weight | - | 44.9 | - | 44.9 | 44.9 |

(continued)

| | | | EX 37 | EX 38 | EX 39 | EX 40 | EX 41 |
|---|---|---|---|---|---|---|---|
| (E) High concentration premixture | (E-1) Reference Ex 7 | parts by weight | 8.0 | 8.0 | - | - | - |
| | (E-2) Reference Ex 8 | parts by weight | - | - | 8.0 | 8.0 | - |
| | (E-6) Reference Ex 12 | parts by weight | - | - | - | - | 8.0 |
| Phosphorus atom content relative to content of polyamide resin | | ppm | 1169 | 1169 | 1169 | 1169 | 1169 |
| Melt-kneading condition | Screw arrangement I or II | - | I | I | I | I | I |
| IR absorption spectrum of molded product prior to heat treatment | Intensity ratio P (A1680/A1632) | - | 0.055 | 0.054 | 0.051 | 0.051 | 0.051 |
| | Intensity ratio T (A1720/A1632) | - | 0.011 | 0.011 | 0.010 | 0.009 | 0.009 |
| IR spectrum of molded product after heat treatment at 190°C for 24 hours | Intensity ratio Q (A' 1680/A' 1632) | - | 0.101 | 0.097 | 0.083 | 0.082 | 0.083 |
| | Intensity ratio R(A' 1700/A' 1632) | - | 0.077 | 0.074 | 0.068 | 0.066 | 0.067 |
| | Intensity ratio S(A' 1720/A' 1632) | - | 0.085 | 0.081 | 0.073 | 0.071 | 0.070 |
| Difference in IR absorption spectrum before and after heat treatment | Difference in intensity ratio (Q-P) before and after heat treatment | - | 0.046 | 0.043 | 0.032 | 0.031 | 0.032 |
| | (S-R) | - | 0.008 | 0.007 | 0.005 | 0.005 | 0.003 |
| | Difference in intensity ratio (S-T) before and after heat treatment | - | 0.074 | 0.070 | 0.063 | 0.062 | 0.061 |
| Heat aging resistance | Retention of tensile strength after treatment at 135°C × 5000 hr | % | 87 | 92 | 112 | 113 | 110 |
| | Retention of tensile strength after treatment at 190°C × 3000 hr | % | 80 | 85 | 110 | 112 | 109 |
| Calcium chloride resistance | Untreated molded product (cycle number) | - | 45 | 48 | 55 | 57 | 55 |
| | Heat-treated product at 190°C × 24 hours (cycle number) | - | 85 | 90 | 99 | 101 | 98 |
| | Heat-treated product at 190°C x 500 hours (cycle number) | - | 87 | 92 | 102 | 105 | 100 |

[Table 7]

[Table 7]

| | | | COMP EX 1 | COMP EX 2 | COMP EX 3 | COMP EX 4 | COMP EX 5 | COMP EX 6 |
|---|---|---|---|---|---|---|---|---|
| (A) Polyamide resin | (A-1) Nylon 6 | parts by weight | 100 | 100 | 100 | - | 100 | 100 |
| | (A-3) Nylon 66 | parts by weight | - | - | - | 100 | - | - |
| (B) Compound | (B-1) Reference Ex 1 | parts by weight | - | - | - | - | - | 4.0 |
| | (B-4) Reference Ex 4 | parts by weight | - | - | - | - | - | - |
| | (B-6) Reference Ex 6 | parts by weight | - | - | - | - | - | - |
| (b) Compound | (b-1) | parts by weight | - | 4.0 | - | - | - | - |
| | (b-2) | parts by weight | - | - | 4.0 | 4.0 | - | - |
| | (b-3) | parts by weight | - | - | - | - | 4.0 | - |
| (b') Epoxy group-/ carbodiimide group-containing compound | (b'-1) | parts by weight | - | 0.4 | - | 0.4 | - | - |
| (C) Phosphorus-containing compound | (C-1) | parts by weight | - | - | - | - | - | - |
| | (C-2) | parts by weight | - | - | - | 0.56 | - | - |
| (D) Filler | (D-1) Glass fiber | parts by weight | - | - | - | - | - | - |
| (E) High concentration premixture | (E-2) Reference Ex 8 | parts by weight | - | - | - | - | - | - |
| | (E-3) Reference Ex 9 | parts by weight | - | - | - | - | - | - |
| (F) Copper master batch | (F-1) Reference EX 13 | parts by weight | - | - | - | - | - | - |

(continued)

| | | | COMP EX 1 | COMP EX 2 | COMP EX 3 | COMP EX 4 | COMP EX 5 | COMP EX 6 |
|---|---|---|---|---|---|---|---|---|
| (G) Other | (G-1) | parts by weight | - | - | - | 0.56 | - | - |
| Phosphorus atom content relative to content of polyamide resin | | ppm | 0 | 0 | 0 | 268 | 0 | 0 |
| Melt-kneading condition | Screw arrangement I or II | - | I | I | I | I | I | I |
| IR absorption spectrum of molded product prior to heat treatment | Intensity ratio P (A1680/A1632) | - | 0.066 | 0.062 | 0.061 | 0.062 | 0.063 | 0.063 |
| | Intensity ratio T (At 720/A1 632) | - | 0.018 | 0.012 | 0.010 | 0.013 | 0.010 | 0.014 |
| IR spectrum of molded product after heat treatment at 190°C for 24 hours | Intensity ratio Q (A'1680/A' 1632) | - | 0.135 | 0.133 | 0.129 | 0.128 | 0.130 | 0.126 |
| | Intensity ratio R(A' 1700/A' 1632) | - | 0.098 | 0.119 | 0.097 | 0.091 | 0.112 | 0.089 |
| | Intensity ratio S(A' 1720/A' 1632) | - | 0.071 | 0.109 | 0.100 | 0.097 | 0.097 | 0.093 |
| Difference in IR absorption spectrum before and after heat treatment | Difference in intensity ratio (Q-P) before and after heat treatment | - | 0.069 | 0.071 | 0.068 | 0.066 | 0.067 | 0.064 |
| | (S-R) | - | -0.027 | -0.010 | 0.003 | 0.006 | -0.015 | 0.004 |
| | Difference in Intensity ratio (S-T) before and after heat treatment | - | 0.054 | 0.098 | 0.090 | 0.083 | 0.087 | 0.079 |
| Heat aging resistance | Retention of tensile strength after treatment at 135°C × 5000 hr | % | 15 | 30 | 32 | 51 | 38 | 57 |
| | Retention of tensile strength after treatment at 190°C × 3000 hr | % | 0 | 15 | 30 | 47 | 27 | 52 |
| Calcium chloride resistance | Untreated molded product (cycle number) | - | 1 | 5 | 6 | 16 | 10 | 25 |
| | Heat-treated product at 190°C X 24 hours (cycle number) | - | 1 | 3 | 12 | 23 | 16 | 40 |
| | Heat-treated product at 190°C × 500 hours (cycle number) | - | 1 | 1 | 5 | 15 | 10 | 29 |

[Table 8]

[Table 8]

| | | | COMP EX 7 | COMP EX 8 | COMP EX 9 | COMP EX 10 | COMP EX 11 | COMP EX 12 |
|---|---|---|---|---|---|---|---|---|
| (A)Polyamide resin | (A-1) Nylon 6 | parts by weight | 100 | 100 | 96 | 100 | 100 | - |
| | (A-3) Nylon 66 | parts by weight | - | - | - | - | - | 87.7 |
| (B) Compound | (B-1) Reference Ex 1 | parts by weight | - | - | - | - | - | - |
| | (B-4) Reference Ex 4 | parts by weight | 4.0 | - | - | - | 3.3 | - |
| | (B-6) Reference Ex 6 | parts by weight | - | 4.0 | - | - | - | - |
| (b) Compound | (b-1) | parts by weight | - | - | - | - | - | - |
| | (b-2) | parts by weight | - | - | - | 3.0 | - | - |
| | (b-3) | parts by weight | - | - | - | - | - | - |
| (b') Epoxy group-/ carbodiimide group-containing compound | (b'-1) | parts by weight | - | - | - | - | - | - |
| (C)Phosphorus-containing compound | (C-1) | parts by weight | - | 0.4 | - | - | - | - |
| | (C-2) | parts by weight | - | - | - | - | - | - |
| (D) Filler | (0-1) Glass fiber | parts by weight | - | - | - | 44.9 | 44.9 | 44.9 |
| (E)High concentration premixture | (E-2) Reference Ex 8 | parts by weight | - | - | 8.0 | - | - | - |
| | (E-3) Reference Ex 9 | parts by weight | - | - | - | - | - | 15.6 |

(continued)

| | | | COMP EX 7 | COMP EX 8 | COMP EX 9 | COMP EX 10 | COMP EX 11 | COMP EX 12 |
|---|---|---|---|---|---|---|---|---|
| (F) Copper master batch | (F-1) Reference EX 13 | parts by weight | - | - | - | 2.55 | - | - |
| (G) Other | (G-1) | parts by weight | - | - | - | - | - | - |
| Phosphorus atom content relative to content of polyamide resin | | ppm | 0 | 1169 | 0 | 0 | 0 | 0 |
| Melt-kneading condition | Screw arrangement I or II | - | I | I | I | I | I | I |
| IR absorption spectrum of molded product prior to heat treatment | Intensity ratio P (A1680/A1632) | - | 0.063 | 0.062 | 0.082 | 0.063 | 0.059 | 0.055 |
| | Intensity ratio T (A1720/A1632) | - | 0.014 | 0.013 | 0.015 | 0.013 | 0.014 | 0.015 |
| IR spectrum of molded product after heat treatment at 190°C for 24 hours | Intensity ratio Q (A' 1680/A' 1632) | - | 0.127 | 0.128 | 0.124 | 0.130 | 0.124 | 0.116 |
| | Intensity ratio R (A' 1700/A' 1632) | - | 0.094 | 0.094 | 0.083 | 0.102 | 0.090 | 0.083 |
| | Intensity ratio S (A' 1720/A' 1632) | - | 0.098 | 0.096 | 0.088 | 0.105 | 0.094 | 0.090 |
| Difference in IR absorption spectrum before and after heat treatment | Difference in intensity ratio (Q-P) before and after heat treatment | - | 0.065 | 0.066 | 0.062 | 0.067 | 0.065 | 0.061 |
| | (S-R) | - | 0.004 | 0.002 | 0.005 | 0.003 | 0.004 | 0.007 |
| | Difference in intensity ratio (S-T) before and after heat treatment | - | 0.084 | 0.083 | 0.073 | 0.092 | 0.080 | 0.075 |
| Heat aging resistance | Retention of tensile strength after treatment at 135°C ×5000 hr | % | 54 | 42 | 72 | 40 | 55 | 73 |
| | Retention of tensile strength after treatment at 190°C × 3000 hr | % | 50 | 38 | 65 | 35 | 51 | 66 |

(continued)

| | | | COMP EX 7 | COMP EX 8 | COMP EX 9 | COMP EX 10 | COMP EX 11 | COMP EX 12 |
|---|---|---|---|---|---|---|---|---|
| Calcium chloride resistance | Untreated molded product (cycle number) | - | 23 | 22 | 29 | 18 | 26 | 32 |
| | Heat-treated product at 190°C × 24 hours (cycle number) | - | 35 | 28 | 55 | - 27 | 48 | 60 |
| | Heat-treated product at 190°C × 500 hours (cycle number) | - | 27 | 20 | 42 | 23 | 32 | 46 |

Compared with Comparative Examples 1 to 8, Examples 1 to 9 and 12 to 14 used the resin compositions of the more preferable compositions and further enhanced the dispersibility of the compound (b) and/or the compound (B) in the polyamide resin compositions. This further enhanced the reactivity of the polyamide resin (A) with the compound (b) and/or the compound (B) during heat treatment, so as to accelerate formation of the shield layer during heat treatment and provide the value Q-P of less than 0.06. This provided molded products having the excellent heat aging resistance and the excellent calcium chloride resistance.

Compared with Comparative Examples 3, 5 and 6, Examples 16 to 18 used the polyamide resin having the lower water content and enhanced the dispersibility of the compound (b) and/or the compound (B) in the resin composition. This accelerated formation of the shield layer during heat treatment and provided the value Q-P of less than 0.06. This provided molded products having the excellent heat aging resistance and the excellent calcium chloride resistance.

Compared with Comparative Examples 3, 5 and 6, Examples 20 to 22 employed the more preferable procedure for melt-kneading and enhanced the compatibility of the polyamide resin (A) with the compound (b) and/or the compound (B) and the dispersibility of the compound (b) and/or the compound (B). This accelerated formation of the shield layer during heat treatment and provided the value Q-P of less than 0.06. This provided molded products having the excellent heat aging resistance and the excellent calcium chloride resistance.

Compared with Comparative Example 9, Examples 10, 11, 15, 19 and 23 to 30 used the resin compositions of the more preferable compositions and employed the more preferable procedures in manufacture of resin composition by using high-concentration premixtures of the polyamide resin (A) and the compound (b) and/or the compound (B). This enhanced the compatibility of the polyamide resin (A) with the compound (b) and/or the compound (B) in the resin composition and caused the compound (b) and/or the compound (B) to be finely dispersed. Accordingly, this further enhanced the reactivity of the polyamide resin (A) with the compound (b) and/or the compound (B) during heat treatment, so as to accelerate formation of the shield layer and provide the value Q-P of less than 0.06. This provided molded products having the excellent heat aging resistance and the excellent calcium chloride resistance.

Compared with Comparative Examples 10 to 12, Examples 31 to 41 further enhanced the reactivity of the polyamide resin (A) with the compound (b) and/or the compound (B) during heat treatment by the procedure described above even when the resin composition included a glass fiber. This accelerated formation of the shield layer and provided the value Q-P of less than 0.06. This provided molded products having the excellent heat aging resistance and the excellent calcium chloride resistance.

Industrial Applicability

The molded product according to the embodiment of the invention has the excellent heat aging resistance and the excellent calcium chloride resistance and, by taking advantage of such excellent properties, is preferably used in automobile applications such as automobile engine peripheral components, automobile under-hood components, automobile gear components, automobile interior components, automobile exterior components, air intake and exhaust system components, engine cooling water system components and automobile electric components and electric and electronic component applications such as LED reflector and SMT connector.

Reference Signs List

Un IR spectrum of cutting surface
Ht IR spectrum of heat-treated cutting surface

## Claims

1. A molded product that is made from a resin composition including a polyamide resin and that has a thickness of not less than 0.56 mm, wherein
a difference (Q - P) between Q and P is less than 0.06,
where P (A1680/ A1632) denotes an intensity ratio of a maximum value of absorbance A1680 at 1680 $cm^{-1} \pm 8\ cm^{-1}$ to a maximum value of absorbance A1632 at 1632 $cm^{-1} \pm 8\ cm^{-1}$ with an absorbance at 1800 $cm^{-1}$ being set to 0 with regard to an infrared absorption spectrum of a cutting surface at a depth of 0.28 mm from a surface of the molded product, and
Q (A'1680/A'1632) denotes an intensity ratio of a maximum value of absorbance A'1680 at 1680 $cm^{-1} \pm 8\ cm^{-1}$ to a maximum value of absorbance A'1632 at 1632 $cm^{-1} \pm 8\ cm^{-1}$ with an absorbance at 1800 $cm^{-1}$ being set to 0 with regard to an infrared absorption spectrum of a heat-treated cutting surface that is the cutting surface after heat treatment at a temperature lower than a melting point of the polyamide resin by 35°C for 24 hours, and wherein
the resin composition further comprises sodium hypophosphite, and the phosphorous atom content obtained by absorption spectrophotometry is 1000 to 3500 ppm relative to the polyamide resin content.

2. The molded product according to claim 1,
wherein with regard to the infrared absorption spectrum of the heat-treated cutting surface, an intensity ratio R (A'1700/A'1632) of a maximum value of absorbance A'1700 at 1700 $cm^{-1} \pm 8\ cm^{-1}$ to the maximum value of absorbance A'1632 at 1632 $cm^{-1} \pm 8\ cm^{-1}$ with the absorbance at 1800 $cm^{-1}$ being set to 0 is smaller than an intensity ratio S (A'1720/A'1632) of a maximum value of absorbance A'1720 at 1720 $cm^{-1} \pm 8\ cm^{-1}$ to the maximum value of absorbance A'1632 at 1632 $cm^{-1} \pm 8\ cm^{-1}$, and
a difference (S - T) between S and T is equal to or greater than 0.03,
where T (A1720/A1632) denotes an intensity ratio of a maximum value of absorbance A1720 at 1720 $cm^{-1} \pm 8\ cm^{-1}$ to the maximum value of absorbance A1632 at 1632 $cm^{-1} \pm 8\ cm^{-1}$ with regard to the infrared absorption spectrum of the cutting surface prior to the heat treatment.

3. The molded product according to either claim 1 or claim 2,
wherein the resin composition comprises at least one of a compound (b) and a compound (B) to be 0.1 to 20 parts by weight as a total relative to 100 parts by weight of the polyamide resin (A), wherein
the compound (b) is a compound having at least either three or more hydroxy groups or three or more amino groups, and
the compound (B) is a compound having at least either a hydroxy group or an amino group and having at least either an epoxy group or a carbodiimide group, such that a total number of the hydroxy group and the amino group in one molecule is larger than a total number of the epoxy group and the carbodiimide group in one molecule.

4. The molded product according to any one of claims 1 to 3, wherein the difference (Q - P) between Q and P is less than 0.05.

## Patentansprüche

1. Geformtes Erzeugnis, das aus einer Harzzusammensetzung besteht, die ein Polyamidharz umfasst, und das eine Dicke von nicht weniger als 0,56 mm aufweist, wobei
die Differenz (Q - P) zwischen Q und P weniger als 0,06 beträgt, wobei
P (A1680/A1632) das Intensitätsverhältnis zwischen dem Maximalwert des Absorptionsvermögens A1680 bei 1680 $cm^{-1} \pm 8\ cm^{-1}$ und dem Maximalwert des Absorptionsvermögens A1632 bei 1632 $cm^{-1} \pm 8\ cm^{-1}$ bezeichnet, wobei das Absorptionsvermögen bei 1800 $cm^{-1}$ in einem Infrarotabsorptionsspektrum einer Schnittfläche in einer Tiefe von 0,28 mm unter der Oberfläche des geformten Erzeugnisses als 0 angenommen wird, und
Q (A'1680/A'1632) das Intensitätsverhältnis zwischen dem Maximalwert des Absorptionsvermögens A'1680 bei

1680 $cm^{-1}$ ± 8 $cm^{-1}$ und dem Maximalwert des Absorptionsvermögens A'1632 bei 1632 $cm^{-1}$ ± 8 $cm^{-1}$ bezeichnet, wobei das Absorptionsvermögen bei 1800 $cm^{-1}$ in einem Infrarotabsorptionsspektrum einer wärmebehandelten Schnittfläche, wobei es sich um die Schnittfläche nach einer 24-stündigen Wärmebehandlung bei einer Temperatur, die um 35 °C niedriger ist als der Schmelzpunkt des Polyamidharzes handelt, als 0 angenommen wird, und wobei
die Harzzusammensetzung weiters Natriumhypophosphit umfasst und der durch Absorptionsspektralphotometrie erhaltene Gehalt an Phosphoratomen, bezogen auf den Polyamidharz-Gehalt, 1000 bis 3500 ppm beträgt.

2. Geformtes Erzeugnis nach Anspruch 1,
wobei in einem Infrarotabsorptionsspektrum der wärmebehandelten Schnittfläche das Intensitätsverhältnis R (A'1700/A'1632) zwischen dem Maximalwert des Absorptionsvermögens A'1700 bei 1700 $cm^{-1}$ ± 8 $cm^{-1}$ und dem Maximalwert des Absorptionsvermögens A'1632 bei 1632 $cm^{-1}$ ± 8 $cm^{-1}$, wobei das Absorptionsvermögen bei 1800 $cm^{-1}$ als 0 angenommen wird, kleiner ist als das Intensitätsverhältnis S (A'1720/A'1632) zwischen dem Maximalwert des Absorptionsvermögens A'1720 bei 1720 $cm^{-1}$ ± 8 $cm^{-1}$ und dem Maximalwert des Absorptionsvermögens A'1632 bei 1632 $cm^{-1}$ ± 8 $cm^{-1}$ und
die Differenz (S - T) zwischen S und T größer oder gleich 0,03 ist,
wobei T (A1720/A1632) das Intensitätsverhältnis zwischen dem Maximalwert des Absorptionsvermögens A1720 bei 1720 $cm^{-1}$ ± 8 $cm^{-1}$ und dem Maximalwert des Absorptionsvermögens A1632 bei 1632 $cm^{-1}$ ± 8 $cm^{-1}$ in einem Infrarotabsorptionsspektrum der Schnittfläche vor der Wärmebehandlung bezeichnet.

3. Geformtes Erzeugnis nach Anspruch 1 oder 2,
wobei die Harzzusammensetzung zumindest eine von einer Verbindung (b) und einer Verbindung (B) umfasst, die insgesamt 0,1 bis 20 Gewichtsteile, bezogen auf 100 Gewichtsteile des Polyamidharzes (A), ausmachen, wobei
die Verbindung (b) eine Verbindung ist, die entweder zumindest drei oder mehr Hydroxygruppen oder drei oder mehr Aminogruppen aufweist und
die Verbindung (B) eine Verbindung ist, die entweder zumindest eine Hydroxygruppe oder eine Aminogruppe aufweist und die entweder zumindest eine Epoxygruppe oder eine Carbodiimidgruppe aufweist, so dass die Gesamtanzahl der Hydroxygruppen und der Aminogruppen pro Molekül größer als die Gesamtanzahl der Epoxygruppen und der Carbodiimidgruppen pro Molekül ist.

4. Geformtes Erzeugnis nach einem der Ansprüche 1 bis 3, wobei die Differenz (Q - P) zwischen Q und P weniger als 0,05 beträgt.

## Revendications

1. Produit moulé qui est fait à partir d'une composition de résine contenant une résine de polyamide et qui a une épaisseur non inférieure à 0,56 mm, dans lequel
la différence (Q - P) entre Q et P est inférieure à 0,06, où
P (A1680/A1632) représente le rapport d'intensité de la valeur maximale d'absorbance A1680 à 1680 $cm^{-1}$ ± 8 $cm^{-1}$ à la valeur maximale d'absorbance A1632 à 1632 $cm^{-1}$ ± 8 $cm^{-1}$, la valeur d'absorbance à 1800 $cm^{-1}$ étant établie à 0 en regard du spectre d'absorption des infrarouges d'une surface de découpe à une profondeur de 0,28 mm par rapport à la surface du produit moulé, et
Q (A'1680/A'1632) représente le rapport d'intensité de la valeur maximale d'absorbance A'1680 à 1680 $cm^{-1}$ ± 8 $cm^{-1}$ à la valeur maximale d'absorbance A'1632 à 1632 $cm^{-1}$ ± 8 $cm^{-1}$, la valeur d'absorbance à 1800 $cm^{-1}$ étant établie à 0 en regard du spectre d'absorption des infrarouges d'une surface de découpe traitée à la chaleur qui est la surface de découpe après traitement à la chaleur à une température inférieure de 35°C au point de fusion de la résine de polyamide pendant 24 heures,
et dans lequel la composition de résine comprend en outre de l'hypophosphite de sodium, et la teneur en atomes de phosphore, obtenue par spectrophotométrie par absorption, est de 1000 à 3500 ppm par rapport à la teneur en résine de polyamide.

2. Produit moulé selon la revendication 1,
dans lequel, en regard du spectre d'absorption des infrarouges de la surface de découpe traitée à la chaleur, le rapport d'intensité R (A'1700/A'1632) de la valeur maximale d'absorbance A'1700 à 1700 $cm^{-1}$ ± 8 $cm^{-1}$ à la valeur maximale d'absorbance A'1632 à 1632 $cm^{-1}$ ± 8 $cm^{-1}$, la valeur d'absorbance à 1800 $cm^{-1}$ étant établie à 0, est inférieur au rapport d'intensité S (A'1720/A'1632) de la valeur maximale d'absorbance A'1720 à 1720 $cm^{-1}$ ± 8 $cm^{-1}$ à la valeur maximale d'absorbance A'1632 à 1632 $cm^{-1}$ ± 8 $cm^{-1}$, et

la différence (S - T) entre S et T est égale ou supérieure à 0,03,
où T (A1720/A1632) représente le rapport d'intensité de la valeur maximale d'absorbance A1720 à 1720 $cm^{-1} \pm 8$ $cm^{-1}$ à la valeur maximale d'absorbance A1632 à 1632 $cm^{-1} \pm 8$ $cm^{-1}$ en regard du spectre d'absorption des infrarouges de la surface de découpe avant le traitement à la chaleur.

**3.** Produit moulé selon l'une ou l'autre des revendications 1 et 2,
dans lequel la composition de résine comprend au moins l'un parmi un composé (b) et un composé (B) représentant 0,1 à 20 parties en poids au total pour 100 parties en poids de la résine de polyamide (A), dans lequel
le composé (b) est un composé ayant soit trois groupes hydroxy ou plus soit trois groupes amino ou plus, et
le composé (B) est un composé ayant au moins soit un groupe hydroxy soit un groupe amino et ayant au moins soit un groupe époxy soit un groupe carbodiimide, de façon que le nombre total du groupe hydroxy et du groupe amino par molécule soit supérieur au nombre total du groupe époxy et du groupe carbodiimide par molécule.

**4.** Produit moulé selon l'une quelconque des revendications 1 à 3, dans lequel la différence (Q - P) entre Q et P est inférieure à 0,05.

Fig. 1

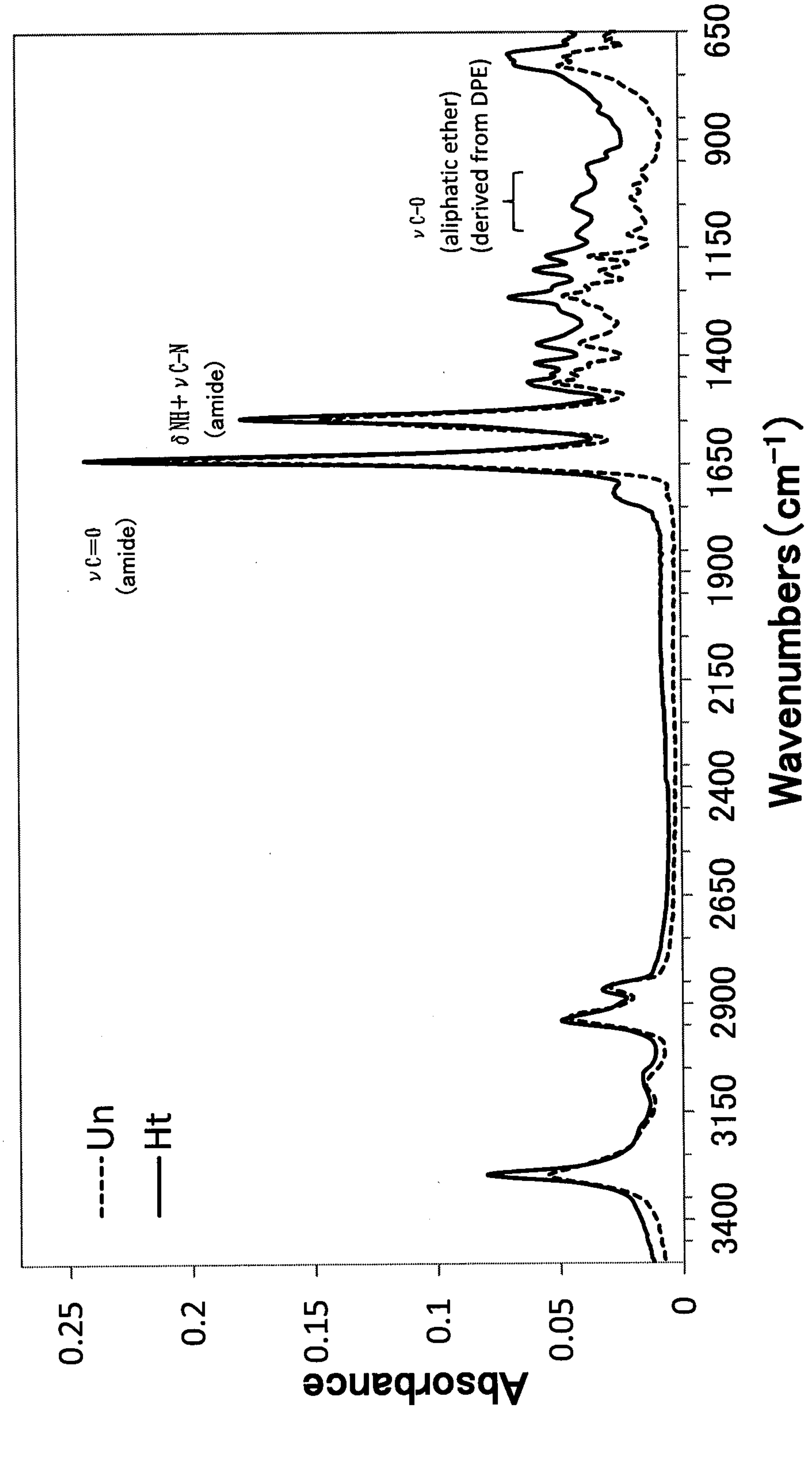

Absorbance
0.25
0.2
0.15
0.1
0.05
0
Un
Ht
ν C=O
(amide)
δ NH + ν C-N
(amide)
ν C-O
(aliphatic ether)
(derived from DPE)
3400
3150
2900
2650
2400
2150
1900
1650
1400
1150
900
650
Wavenumbers (cm-1)

Fig.2

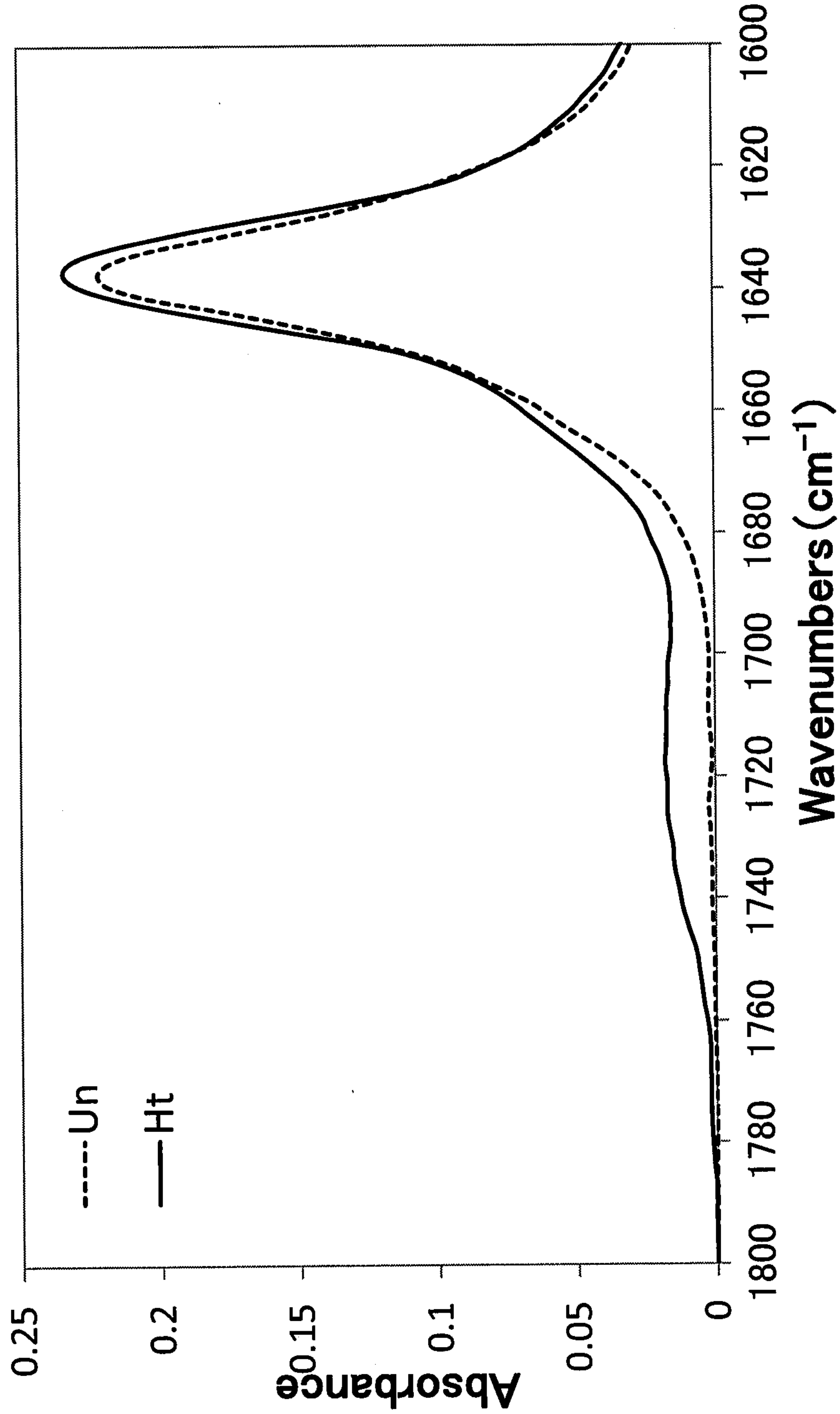
Absorbance
0.25
0.2
0.15
0.1
0.05
0
Wavenumbers (cm$^{-1}$)
1800
1780
1760
1740
1720
1700
1680
1660
1640
1620
1600
Un
Ht

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S57212252 A
- JP 2006273945 A
- WO 2006084862 A
- WO 2010014810 A
- WO 201556393 A
- US 8952107 B
- US 2008069375 A